# EUROPEAN PATENT APPLICATION

(11) **EP 2 789 515 A1**
(43) Date of publication of application: **15.10.2014**
(21) Application number: 11877130.2
(22) Date of filing: 06.12.2011
(51) Int. Cl.: B60W 10/10, B60K 6/445, B60K 6/54, B60W 10/08, B60W 20/00

(54) **GEAR SHIFT INSTRUCTION DEVICE**

(71) Applicant: TOYOTA JIDOSHA KABUSHIKI KAISHA, Toyota-shi, Aichi-ken, 471-8571 (JP)
(72) Inventor: SATO Keita, Toyota-shi Aichi 471-8571 (JP); FUKUSHIRO Eiji, Toyota-shi Aichi 471-8571 (JP)
(74) Representative: Intès, Didier Gérard André
(86) International application number: PCT/JP2011/078151
(87) International publication number: WO 2013/084292

(57) **Abstract**

In a hybrid vehicle on which an electrical-type continuously variable transmission mechanism with a sequential shift mode is mounted, during regenerative operation where an accelerator is turned off, the current driving force and the driving force after gear shifting are compared with each other. In the case where the difference between these driving forces is equal to or more than a predetermined value, a gear shift instruction is not performed and then both of a shift-up lamp and a shift-down lamp of a gear-shift instruction device are turned off. This avoids degradation in drivability by performing gear shifting in accordance with a gear shift instruction.

## Description

### TECHNICAL FIELD

The present invention relates to a gear-shift instruction device that performs gear shift instruction for a driver of a vehicle. In particular, the present invention relates to a countermeasure for improving drivability.

### BACKGROUND ART

Conventionally, as disclosed in, for example, following Patent Literature 1, a gear-shift instruction device (generally, referred to as a gear shift indicator (GSI)) is known. The gear-shift instruction device provides instruction to the driver to perform a gear shift operation to an appropriate gear shift position in a vehicle on which a manual transmission is mounted in the case where the selected gear shift position is different from the appropriate gear shift position (for example, a gear shift position that allows improving the fuel consumption rate) obtained from an engine load, a vehicle speed, and similar parameter, during running.

This type of gear-shift instruction device is not limited to the vehicle on which the general manual transmission is mounted, and is also applicable to a hybrid vehicle or similar vehicle that includes an electrical-type continuously variable transmission (CVT) mechanism with a sequential shift mode as disclosed in following Patent Literature 2 and Patent Literature 3.

This hybrid vehicle includes an engine and an electric motor (for example, a motor-generator or a motor). The electric motor is driven by electric power generated due to the output of the engine or by electric power stored in a battery (an electric storage device). The hybrid vehicle can run using any one or both of the engine and the electric motor as a driving force source. Additionally, during deceleration of the vehicle, the electric motor functions as an electric generator to charge generated (regeneratively generated) electric power to the battery.

In the case where the above-described gear-shift instruction device is applied to this type of hybrid vehicle, when the sequential shift mode is set due to the operation of a shift lever by the driver and the gear shift operation is performed, for example, the rotation speed of the above-described first electric motor is controlled to adjust a target engine rotation speed so as to realize the gear shift ratio (the gear shift ratio that is a ratio of the engine rotation speed to the transmission-output-shaft rotation speed) in this operated gear shift position.

Patent Literature 2 discloses that guidance (the instruction to change the gear shift position) for the driver is performed using the gear shift position where the coasting regenerative electric power becomes maximum (the regeneration efficiency becomes maximum) as a recommended gear shift position in a vehicle on which the above-described gear-shift instruction device is mounted during deceleration.

### CITATION LIST

### PATENT LITERATURE

PATENT LITERATURE 1: Japanese Unexamined Patent Application Publication No. 2004-60548
PATENT LITERATURE 2: Japanese Unexamined Patent Application Publication No. 2010-268617
PATENT LITERATURE 3: Japanese Unexamined Patent Application Publication No. 2010-13001

### SUMMARY OF INVENTION

### TECHNICAL PROBLEM

However, during deceleration (for example, during deceleration when the acceleration is turned off) in the above-described sequential shift mode, in the case where an instruction of the above-described gear-shift instruction device is performed to improve the regeneration efficiency and then a gear shift operation is performed in accordance with this instruction, the engine may cause excessive rotation or the driver may feel discomfort due to change in sense of deceleration of the vehicle.

For example, in the case where the driver has performed a shift-down operation in accordance with a shift-down instruction of the above-described gear-shift instruction device, excessive rotation of the engine may be caused in association with an increase in gear shift ratio. On the other hand, in the case where the driver performs a shift-up operation in accordance with a shift-up instruction of the above-described gear-shift instruction device, the braking force (negative driving force) by engine brake is reduced in association with a decrease in gear shift ratio. This may change the sense of deceleration. Under this situation, the driver may feel discomfort.

The present invention has been made in view of these points, it is an object of the present invention to provide a gear-shift instruction device that can avoid a situation where a driver feels discomfort for a vehicle that allows gear shifting in a sequential shift mode and generates regenerative power during deceleration.

### SOLUTIONS TO THE PROBLEMS

### -Principles in Solving the Problems of the Invention-

The principles in solving the problems of the present invention to achieve the object are not to perform an operation for prompting a driver to change a gear shift position during regenerative power generation of a vehicle in a gear-shift instruction device that is mounted on a hybrid vehicle to prompt the driver to change the gear shift position. This allows avoiding degradation in drivability in association with the change of the gear shift position.

### -Means to Solve Problems-

Specifically, the present invention is a gear-shift instruction device to be applied to a hybrid vehicle. The hybrid vehicle includes a driving power transmission system and an electric generator. The driving power transmission system is configured to allow manual selection of a gear shift position. The electric generator is configured to generate electric power in a driven state receiving a rotational force from a wheel. The electric generator is a generator-motor configured to output a driving force to a drive shaft. The gear-shift instruction device is configured to prompt a driver to change the gear shift position during power running of this generator-motor. The gear-shift instruction device is configured not to perform an operation for prompting the driver to change the gear shift position while electric generation of the electric generator is receiving a rotational force from the wheel.

The term "gear shift position" in the present invention is defined as the "operation state which can be changed by a manual operation by the driver." Specifically, the "gear shift position" of the present invention includes a gear shift ratio fixed in each stage (gear shift position) and a gear shift ratio with a constant range in each stage. This gear shift ratio with a constant range means a linear range of, for example, automatic gear shifting and a range like a step of step-variable shifting and a range hold type (this range hold type will be described later). As a concept of "stage" in the case of this range hold type, for example, in a vehicle that has a range for enhancing the braking force by an engine brake (engine brake range; B range), this B range is also included in the meaning of the term "stage."

According to the above features, during electric generation of the electric generator in a state where the gear shift position of the driving power transmission system is manually selected (for example, during electric generation by regeneration during deceleration of the vehicle), the operation for prompting the driver to change the gear shift position is not performed. This allows avoiding a situation where the driver feels discomfort due to the change in driving force in the case where the operation for changing the gear shift position is performed in accordance with the operation for prompting the change of the gear shift position during electric generation of the electric generator. That is, the state during the electric generation of the electric generator is an operating state where the driver is generally likely to recognize the change in driving force. In this operating state, when the operation for changing the gear shift position is performed, the driving force is changed and then the driver may feel discomfort. In the means to solve problems, the operation for prompting the driver to change the gear shift position is not performed during electric generation of the electric generator. This allows avoiding this situation that causes a discomfort feeling.

Preferably, the operation for prompting the driver to change the gear shift position is configured to be performed also during running (during EV running) where the drive shaft is driven by the generator-motor alone.

The following describes the condition (the condition for performing (permitting) the operation for prompting the change of the gear shift position) under which the operation for prompting the driver to change the gear shift position is released from the non-performance state (performed).

Firstly, there is a case where an amount of change in driving force before and after a change is equal to or less than a predetermined amount if the driver is prompted to change the gear shift position and then changes the gear shift position in accordance with this prompting.

In this case, in the case where the amount of change in driving force before and after the gear the change in gear shift position is comparatively small, it is determined that the driver feels little discomfort and then the operation for prompting the change of the gear shift position is performed. This allows, for example, prompting the change to the gear shift position for enhancing the regeneration efficiency of the electric generator, thus improving energy efficiency.

In a case where the amount of change in driving force before and after the change of the gear shift position is "0" or in a case where a driving force before the change of the gear shift position has a smaller value than a value obtained by adding a predetermined margin to a value of a driving force after the change of the gear shift position, the operation for prompting the driver to change the gear shift position may be released from the non-performance state (performed).

In particular, in the case where the operation for prompting the driver to change the gear shift position is released from the non-performance state (the operation for prompting the driver to change the gear shift position is performed) when the amount of change in driving force before and after the change in gear shift position is "0", the amount of change in driving force before and after this change can be "0" even when the change of the gear shift position is prompted and then the gear shift position is changed in accordance with this prompting. This considerably improves the drivability.

In a case where a torque region obtained based on a driving force and a vehicle speed that are required by the driver is a positive torque region or in a case where a vehicle speed at which a driving force of a driving force source for vehicle running becomes large compared with a braking torque, the operation for prompting the driver to change the gear shift position may be released from the non-performance state (performed).

In these cases, the required driving force before the change of the gear shift position is small. Accordingly, the amount of change in driving force is small even when the gear shift position is changed. For example, the amount of change is hardly recognized by the driver. Accordingly, in this situation, the operation for prompting the change of the gear shift position is performed. This allows, for example, prompting the change to the gear shift position for enhancing the regeneration efficiency of the electric generator.

In a case where the driver is performing an operation for giving a braking force to the wheel, the operation for prompting the driver to change the gear shift position may be released from the non-performance state (performed).

For example, this is the case where the driver is performing the depression operation of the brake pedal. In this case, the magnitude of the above-described braking force is likely to be larger than the change in driving force in association with gear shifting. In this situation, the vehicle occupant is less likely to recognize the change in driving force in association with gear shifting. Accordingly, in this situation, the operation for prompting the change of the gear shift position is released from the non-performance state (permitted). This allows prompting the change to the gear shift position for enhancing the regeneration efficiency of the electric generator.

The following describes an aspect of setting a non-performance state of the operation for prompting the driver to change the gear shift position during electric generation of the electric generator. An amount of change in driving force when the gear shift position is changed is preliminarily stored corresponding to a vehicle speed. In a case where a current vehicle speed causes a predetermined amount or more as the amount of change in driving force when the gear shift position is changed, the operation for prompting the driver to change the gear shift position is configured not to be performed.

Additionally, as an aspect, an amount of change in driving force when a change between respective gear shift positions is performed is preliminarily stored. An operation for prompting the driver to change to a gear shift position where an amount of change in driving force with respect to a currently selected gear shift position has a predetermined value or more is configured not to be performed.

Furthermore, as an aspect, in a case where a driving force required by the driver is equal to or less than a predetermined value, the operation for prompting the driver to change the gear shift position is configured not to be performed. For example, when an accelerator-off operation by the driver is performed, the operation for prompting the above-described driver to change the above-described gear shift position is not performed.

Specifically, the driving power transmission system includes a continuously variable transmission mechanism configured to steplessly change a gear shift ratio. The driving power transmission system is configured to change the gear shift ratio set by the continuously variable transmission mechanism in multiple stages in a manual gear shift mode.

The automatic gear shift mode described here is, for example, the case where the shift lever is operated in a drive (D) position. Additionally, the manual gear shift mode is the case where the shift lever is operated in a sequential (S) position. Furthermore, in the case where "2 (2nd)", "3 (3rd)", and similar position are included as range positions, the manual gear shift mode includes the case where the shift lever is operated in the range position of these "2 (2nd)" and "3 (3rd)".

As a specific configuration of the hybrid vehicle, the vehicle includes an internal combustion engine as a driving force source for running. The configuration includes a power split mechanism constituted of a planetary gear mechanism. The planetary gear mechanism includes a planetary carrier, a sun gear, and a ring gear. The planetary carrier is coupled to an output shaft of the internal combustion engine. The sun gear is coupled to a first electric motor. The ring gear is coupled to a second electric motor. In this configuration, a rotation speed of the first electric motor is controlled to change a rotation speed of the internal combustion engine so as to change a gear shift ratio in the driving power transmission system.

### ADVANTAGEOUS EFFECTS OF INVENTION

According to the present invention, in the gear-shift instruction device that prompts the driver to change the gear shift position, the operation for prompting the driver to change the gear shift position is not performed during electric generation of the electric generator. This allows avoiding a situation where the driver feels discomfort due to the change in driving force in the case where the operation for changing the gear shift position is performed in accordance with the operation for prompting the change of the gear shift position during electric generation of the electric generator.

### BRIEF DESCRIPTION OF THE DRAWINGS

[Fig 1] FIG. 1 is a diagram illustrating a schematic configuration of a hybrid vehicle according to an embodiment.
[Fig 2] FIG. 2 is a block diagram illustrating a schematic configuration of a control system of the hybrid vehicle.
[Fig 3] FIG. 3 is a flowchart illustrating a procedure of a basic control of the hybrid vehicle.
[Fig 4] FIG. 4 is a graph illustrating one example of a required-driving-force setting map.
[Fig 5] FIG. 5 is a graph illustrating one example of a target-engine-rotation-speed setting map.
[Fig 6] FIG. 6 is a graph illustrating one example of a target-gear-shift-position setting map.
[Fig 7] FIG. 7 is a graph illustrating characteristics of engine brake obtained corresponding to a vehicle speed and a gear shift position.
[Fig 8] FIG. 8 is a collinear diagram of a dynamic relationship between rotation speeds and torques of respective rotational elements of a power split mechanism during regenerative power generation.
[Fig 9] FIG. 9 is a diagram illustrating a combination meter.
[Fig 10] FIG. 10 includes diagrams illustrating respective lighting states of a shift-up lamp and a shift-down lamp, FIG. 10A is a diagram illustrating a state during a shift-up instruction, and FIG. 10B is a diagram illustrating a state during a shift-down instruction.
[Fig 11] FIG. 11 is a flowchart illustrating a procedure of a gear shift instruction control during regeneration.
[Fig 12] FIG. 12 is a flowchart illustrating a partial step of the procedure of the gear shift instruction control in Modification 1
[Fig 13] FIG. 13 is a flowchart illustrating a partial step of the procedure of the gear shift instruction control in Modification 2.
[Fig 14] FIG. 14 is a flowchart illustrating a partial step of the procedure of the gear shift instruction control in Modification 3.
[Fig 15] FIG. 15 is a flowchart illustrating a procedure of a gear shift instruction control in Modification 4.
[Fig 16] FIG. 16 is a graph illustrating another example of the target-gear-shift-position setting map.

### DESCRIPTION OF EMBODIMENTS

Hereinafter, embodiments of the present invention will be described with reference to the accompanying drawings. In this embodiment, a description will be given of the case where the present invention is applied to a front-engine front-drive (FF) hybrid vehicle.

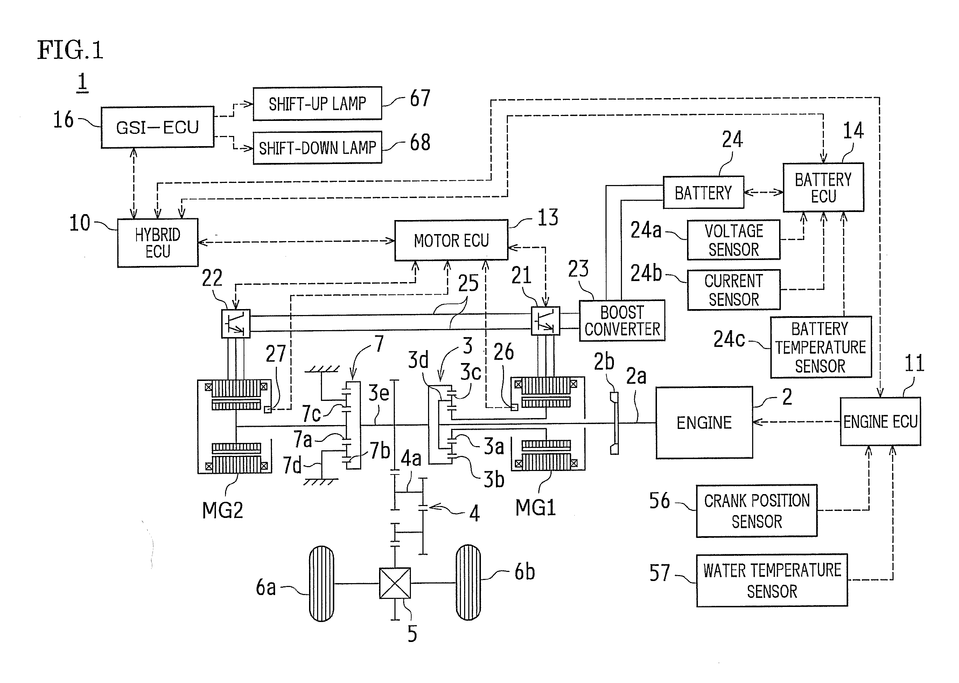

FIG. 1 is a diagram illustrating a schematic configuration of a hybrid vehicle 1 according to this embodiment. As illustrated in FIG. 1, the hybrid vehicle 1 includes an engine 2, a tri-axial power split mechanism 3, a first motor-generator MG1, and a second motor-generator MG2 as a drive system for providing a driving force to front wheels (drive wheels; wheels in the present invention) 6a and 6b. The power split mechanism 3 is coupled to a crankshaft 2a as an output shaft of the engine 2 via a damper 2b. The first motor-generator MG1 is coupled to this power split mechanism 3 and can generate electric power. The second motor-generator MG2 is coupled to a ring gear shaft 3e as a drive shaft coupled to the power split mechanism 3 via a reduction mechanism 7. These crankshaft 2a, power split mechanism 3, first motor-generator MG1, second motor-generator MG2, reduction mechanism 7, and ring gear shaft 3e constitute a driving power transmission system in the present invention.

The above-described ring gear shaft 3e is coupled to the front wheels 6a and 6b via a gear mechanism 4 and a differential gear 5 for front wheels.

This hybrid vehicle 1 also includes a hybrid electronic control unit (hereinafter referred to as a hybrid ECU) 10 that controls the entire drive system of the vehicle.

### -Engine and Engine ECU-

The engine 2 is an internal combustion engine that outputs power using hydrocarbon-based fuel such as gasoline and light oil. An engine electronic control unit (hereinafter referred to as an engine ECU) 11, which receives signals from various sensors for detecting the operating state of the engine 2, performs operation controls such as a fuel injection control, an ignition control, and an intake air amount adjustment control.

The engine ECU 11 performs communication with the hybrid ECU 10, performs operation control of the engine 2 based on a control signal from this hybrid ECU 10, and outputs data related to the operating state of the engine 2 to the hybrid ECU 10 as necessary. Here, the engine ECU 11 is coupled to a crank position sensor 56, a water temperature sensor 57, and similar sensor. The crank position sensor 56 outputs a detection signal (pulse) for every rotation of the crankshaft 2a by a certain angle. The engine ECU 11 calculates an engine rotation speed Ne based on the output signal from this crank position sensor 56. The water temperature sensor 57 outputs a detection signal corresponding to a cooling water temperature of the engine 2.

### -Power Split Mechanism-

The power split mechanism 3 is, as illustrated in FIG. 1, constituted as a planetary gear mechanism. The planetary gear mechanism includes a sun gear 3a as an external gear, a ring gear 3b as an internal gear, a plurality of pinion gears 3c, and a planetary carrier 3d. The ring gear 3b is arranged concentrically with the sun gear 3a. The plurality of pinion gears 3c meshes with the sun gear 3a and meshes with the ring gear 3b. The planetary carrier 3d holds this plurality of pinion gears 3c to allow free rotation and revolution of the plurality of pinion gears 3c. The planetary gear mechanism provides a differential action using the sun gear 3a, the ring gear 3b, and the planetary carrier 3d as rotational elements. In this power split mechanism 3, the planetary carrier 3d is coupled to the crankshaft 2a of the engine 2. The sun gear 3a is coupled to a rotor (rotating element) of the first motor-generator MG1. Furthermore, the ring gear 3b is coupled to the above-described reduction mechanism 7 via the above-described ring gear shaft 3e.

In the power split mechanism 3 thus configured, when a reaction force torque due to the first motor-generator MG1 is input to the sun gear 3a with respect to the output torque of the engine 2 input to the planetary carrier 3d, a torque larger than the torque input from the engine 2 is generated at the ring gear 3b as an output element. In this case, the first motor-generator MG1 functions as an electric generator. When the first motor-generator MG1 functions as an electric generator, the driving force of the engine 2 input from the planetary carrier 3d is distributed to the sun gear 3a side and the ring gear 3b side corresponding to the respective gear ratios.

On the other hand, at the time of a start request for the engine 2, the first motor-generator MG1 functions as an electric motor (starter motor). The driving force of this first motor-generator MG1 is provided to the crankshaft 2a via the sun gear 3a and the planetary carrier 3d to cause cranking of the engine 2.

In the power split mechanism 3, when the rotation speed (output-shaft rotation speed) of the ring gear 3b is constant, changing the rotation speed of the first motor-generator MG1 in an increasing and decreasing manner allows continuously (steplessly) changing the rotation speed of the engine 2. That is, the power split mechanism 3 functions as a gear shifting unit.

### -Reduction Mechanism-

The above-described reduction mechanism 7 includes, as illustrated in FIG. 1, a sun gear 7a as an external gear, a ring gear 7b as an internal gear, a plurality of pinion gears 7c, and a planetary carrier 7d. The ring gear 7b is arranged concentrically with this sun gear 7a. The plurality of pinion gears 7c meshes with the sun gear 7a and meshes with the ring gear 7b. The planetary carrier 7d holds this plurality of pinion gears 7c to allow free rotation of the plurality of pinion gears 7c. In this reduction mechanism 7, the planetary carrier 7d is secured to a transmission case. The sun gear 7a is coupled to a rotor (rotating element) of the second motor-generator MG2. Furthermore, the ring gear 7b is coupled to the above-described ring gear shaft 3e.

### -Power Switch-

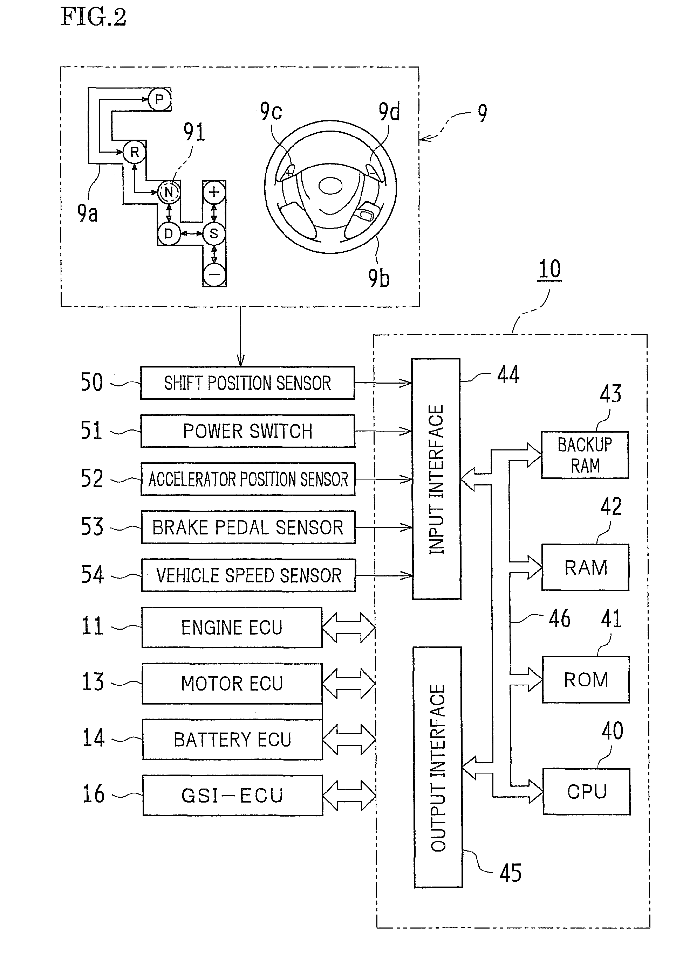

In the hybrid vehicle 1, a power switch 51 (see FIG. 2) for switching start and stop of the hybrid system is disposed. This power switch 51 is, for example, a rebounding push switch that alternately switches switch-On and switch-Off every push operation.

Here, the hybrid system is a system that employs the engine 2 and the motor-generators MG1 and MG2 as driving force sources for running and controls running of the hybrid vehicle 1 by execution of various controls including the operation control of the engine 2, driving controls of the motor-generators MG1 and MG2, a cooperative control of the engine 2 and the motor-generators MG1 and MG2, and similar control.

In the case where the power switch 51 is operated by an occupant including the driver, the power switch 51 outputs a signal (an IG-On instruction signal or an IG-Off instruction signal) corresponding to this operation, to the hybrid ECU 10. The hybrid ECU 10 starts or stops the hybrid system based on the signal output from the power switch 51 or similar signal.

Specifically, in the case where the power switch 51 is operated during stop of the hybrid vehicle 1, the hybrid ECU 10 starts the above-described hybrid system in P position, which will be described later. Accordingly, the vehicle becomes a state that allows running. Here, when the hybrid system is started during vehicle stop, the hybrid system is started in the P position. Even in an accelerator-on state, the driving force is not output. The state that allows running of the vehicle is a state where vehicle running can be controlled by an instruction signal of the hybrid ECU 10 and a state (Ready-On state) where the hybrid vehicle 1 can start moving and run when the driver presses on the accelerator. Here, the Ready-On state includes a state (a state that allows EV running) where the second motor-generator MG2 allows the hybrid vehicle 1 to start moving and run during stop of the engine 2.

The hybrid ECU 10 stops the hybrid system, for example, in the case where the power switch 51 is operated (for example, pushed for a short period of time) when the hybrid system is being started and the gear shift position is in the P position during vehicle stop.

### -Shift Operation Device and Gear Shift Mode-

In the hybrid vehicle 1 of this embodiment, a shift operation device 9 as illustrated in FIG. 2 is disposed. This shift operation device 9 includes a shift lever 91 that is arranged in the vicinity of the driver's seat and allows shifting operation. In the shift operation device 9, a shift gate 9a is formed. The shift gate 9a has a parking position (P position), a reverse position (R position), a neutral position (N position), a drive position (D position), and a sequential position (S position) so as to allow the driver to shift the shift lever 91 to a desired position. The position of the shift lever 91 in any of the respective positions of these P position, R position, N position, D position, and S position (including the "+" position and the "-" position below) is detected by a shift position sensor 50.

In a state where the above-described shift lever 91 is operated to the "D position", the hybrid system is set to an "automatic gear shift mode" so as to perform an electrical-type continuously-variable shifting control where the gear shift ratio is controlled to set the operating point of the engine 2 on the optimal fuel consumption operation line described later.

On the other hand, in a state where the above-described shift lever 91 is operated in the "S position", the hybrid system is set to a "manual gear shift mode (sequential shift mode (S mode))." In the front and back of this S position, a "+" position and a "-" position are disposed. The "+" position is a position to which the shift lever 91 is operated when a manual up-shift is performed. The "-" position is a position to which the shift lever 91 is operated when a manual down-shift is performed. When the shift lever 91 is in the S position, operating the shift lever 91 to the "+" position or the "-" position from the S position as the neutral position (gear shift operation by manual operation) allows up-shifting or down-shifting a pseudo gear shift position (for example, a gear shift position established by adjusting the engine rotation speed using the control of the first motor-generator MG1) established by the hybrid system. Specifically, the gear shift position is shifted up by one stage (for example, 1st to 2nd to 3rd to 4th to 5th to 6th) for every operation to the "+" position. On the other hand, the gear shift position is shifted down by one stage (for example, 6th to 5th to 4th to 3rd to 2nd to 1st) for every operation to the "-" position. Here, the number of stages that can be selected in this manual gear shift mode is not limited to "six stages" and may be a different number of stages (such as "four stages" and "eight stages").

Here, the concept of the manual gear shift mode in the present invention is not limited to the case where the above-described shift lever 91 is in the S position. When the range positions include "2 (2nd)", "3 (3rd)", and similar position as the range positions in the shift gate 9a, this concept includes the case where the shift lever 91 is operated to the range positions of "2 (2nd)" and "3 (3rd)." For example, in the case where the shift lever 91 is operated from the D position to the range position of "3 (3rd)", the mode is switched from the automatic gear shift mode to the manual gear shift mode.

At a steering wheel 9b arranged in front of the driver's seat (see FIG. 2), paddle switches 9c and 9d are disposed. These paddle switches 9c and 9d have lever shapes and include a shift-up paddle switch 9c and a shift-down paddle switch 9d. The shift-up paddle switch 9c is used for outputting an instruction signal to request an up-shift in the manual gear shift mode. The shift-down paddle switch 9d is used for outputting an instruction signal to request a down-shift. A symbol of "+" is attached to the shift-up paddle switch 9c while a symbol of "-" is attached to the shift-down paddle switch 9d. In the case where the shift lever 91 is operated to the "S position" and the "manual gear shift mode" is activated, the shift-up paddle switch 9c is operated (operated to be pulled to the near side) to up-shift the gear shift position by one stage for every operation. On the other hand, when the shift-down paddle switch 9d is operated (operated to be pulled to the near side), the gear shift position is shifted down by one stage for every operation.

Accordingly, in the hybrid system according to this embodiment, when the shift lever 91 is operated to the "D position" and the "automatic gear shift mode" is activated, a driving control is performed such that the engine 2 is efficiently operated. Specifically, the hybrid system is controlled such that the driving operation point of the engine 2 is on the optimal fuel consumption line. On the other hand, when the shift lever 91 is operated to the "S position" and the "manual gear shift mode (S mode)" is set, a gear shift ratio that is a ratio of the rotation speed of the engine 2 with respect to the rotation speed of the ring gear shaft 3e can be changed corresponding to the gear shift operation of the driver, for example, to six stages (1st to 6th).

### -Motor-Generator and Motor ECU-

The motor-generators MG1 and MG2 are each constituted of a well-known synchronous generator-motor that can be driven as an electric generator and can be driven as an electric motor. The motor-generators MG1 and MG2 supply/receive electric power with a battery (electric storage device) 24 via respective inverters 21 and 22 and a boost converter 23. The respective inverters 21 and 22, the boost converter 23, and the battery 24 are coupled to one another by electric power lines 25. The electric power lines 25 are constituted as a positive electrode bus bar and a negative electrode bus bar that are shared by the respective inverters 21 and 22, and allows electric power generated by one of the motor-generators MG1 and MG2 to be consumed in the other motor. Accordingly, the battery 24 is charged and discharged due to the electric power generated any of the motor-generators MG1 and MG2 or due to the shortage of the electric power. Here, in the case where the charge and discharge of the electric power are balanced by the motor-generators MG1 and MG2, the battery 24 is not charged or discharged.

The motor-generators MG1 and MG2 are both drivingly controlled by a motor electronic control unit (hereinafter referred to as a motor ECU) 13. This motor ECU 13 receives signals required for driving controls of the motor-generators MG1 and MG2, for example, signals from an MG1 rotation speed sensor (resolver) 26 and an MG2 rotation speed sensor 27 that detect respective rotation positions of the rotors (rotating shafts) of the motor-generators MG1 and MG2 and respective phase currents that are detected by the current sensor and applied to the motor-generators MG1 and MG2. Additionally, the motor ECU 13 outputs switching control signals to the inverters 21 and 22. For example, any of the motor-generators MG1 and MG2 is drivingly controlled as an electric generator (for example, a regeneration control of the second motor-generator MG2 is performed) or drivingly controlled as an electric motor (for example, a power running control of the second motor-generator MG2 is performed). Additionally, the motor ECU 13 communicates with the hybrid ECU 10. In accordance with a control signal from this hybrid ECU 10, the motor ECU 13 drivingly controls the motor-generators MG1 and MG2 described above and outputs data related to the operating state of the motor-generators MG1 and MG2 to the hybrid ECU 10 as necessary.

Here, the above-described second motor-generator MG2 corresponds to the words "the electric generator being configured to generate electric power in a driven state receiving a rotational force from a wheel" and "a generator-motor configured to output a driving force to a drive shaft" in the present invention.

### -Battery and Battery ECU-

The battery 24 is managed by a battery electronic control unit (hereinafter referred to as a battery ECU) 14. This battery ECU 14 receives signals required for managing the battery 24, for example, an inter-terminal voltage from a voltage sensor 24a mounted across the terminals of the battery 24, a charge/discharge current from a current sensor 24b mounted on an electric power line 25 coupled to the output terminal of the battery 24, and a battery temperature Tb from a battery temperature sensor 24c mounted on the battery 24. The battery ECU 14 outputs data related to the state of the battery 24 to the hybrid ECU 10 via communication as necessary.

To manage the battery 24, the battery ECU 14 calculates the remaining capacity State of Charge (SOC) of electric power based on the integrated value of the charge/discharge current detected by the current sensor 24b. Based on the calculated remaining capacity SOC and the battery temperature Tb detected by the battery temperature sensor 24c, the battery ECU 14 calculates an input limitation Win and an output limitation Wout that are the maximum permissible powers to allow charging and discharging the battery 24. Here, the input limitation Win and the output limitation Wout of the battery 24 are set by setting respective basic values of the input limitation Win and the output limitation Wout based on the battery temperature Tb, setting a correction coefficient for input limitation and a correction coefficient for output limitation based on the remaining capacity SOC of the battery 24, and multiplying the set basic values of the input limitation Win and the output limitation Wout by the above-described correction coefficients.

### -Hybrid ECU and Control System-

The above-described hybrid ECU 10 includes, as illustrated in FIG. 2, a central processing unit (CPU) 40, a read only memory (ROM) 41, a random access memory (RAM) 42, a backup RAM 43, and similar member. The ROM 41 stores various control programs, a map referenced during the execution of these various control programs, and similar information. The CPU 40 executes the various control programs stored in the ROM 41 and various arithmetic processings based on the map. The RAM 42 is a memory that temporarily stores the result of the arithmetic operation in the CPU 40, data received from each sensor, and similar information. The backup RAM 43 is a non-volatile memory that stores, for example, data to be stored during IG-Off and similar data.

The CPU 40, the ROM 41, the RAM 42, and the backup RAM 43 described above are coupled together via a bus 46 and are coupled to an input interface 44 and an output interface 45.

The input interface 44 is coupled to the above-described shift position sensor 50, the above-described power switch 51, an accelerator position sensor 52, a brake pedal sensor 53, and a vehicle speed sensor 54, and similar member. The accelerator position sensor 52 outputs a signal corresponding to the depression amount of an accelerator pedal. The brake pedal sensor 53 outputs a signal corresponding to the depression amount of a brake pedal. The vehicle speed sensor 54 outputs a signal corresponding to a vehicle body speed.

Accordingly, the hybrid ECU 10 receives a shift position signal from the shift position sensor 50, the IG-On signal and the IG-Off signal from the power switch 51, an accelerator position signal from the accelerator position sensor 52, a brake-pedal-position signal from the brake pedal sensor 53, a vehicle speed signal from the vehicle speed sensor 54, and similar signal.

The input interface 44 and the output interface 45 are coupled to the engine ECU 11, the motor ECU 13, the battery ECU 14, and a gear shift indicator (GSI)-ECU 16 described later. The hybrid ECU 10 transmits and receives various control signals and data to/from these engine ECU 11, motor ECU 13, battery ECU 14, and GSI-ECU 16.

### -Flow of Driving Force in Hybrid System-

The hybrid vehicle 1 thus configured calculates a torque (required torque) to be output to the drive wheels 6a and 6b based on an accelerator position Acc corresponding to the depression amount of the accelerator pedal by the driver and a vehicle speed V. Operation controls of the engine 2 and the motor-generators MG1 and MG2 are performed to ensure running by a required driving force corresponding to this required torque. Specifically, to ensure reduction in fuel consumption amount, the second motor-generator MG2 is used in an operating region where the required driving force is comparatively low to achieve the above-described required driving force. On the other hand, in an operating region where the required driving force is comparatively high, the second motor-generator MG2 is used and the engine 2 is driven to achieve the above-described required driving force using the driving force from these driving sources (running drive-force sources).

More specifically, in the case where the operational efficiency of the engine 2 is low during starting the vehicle, during low-speed running, or similar case, the running is performed with the second motor-generator MG2 alone (hereinafter referred to as "EV running" in other words). Also in the case where the driver selects the EV running mode using a running-mode selecting switch arranged in the vehicle cabin, EV running is performed.

On the other hand, during normal running (hereinafter also referred to as HV running), for example, the above-described power split mechanism 3 splits the driving force of the engine 2 into two paths (torque split). One driving force is used for direct drive (drive with direct torque) of the drive shafts 6a and 6b while the other driving force is used for driving the first motor-generator MG1 so as to perform electric generation. At this time, the electric power generated by driving the first motor-generator MG1 is used to drive the second motor-generator MG2 so as to secondary drive (drive with the electrical path) the drive shafts 6a and 6b.

Accordingly, the above-described power split mechanism 3 functions as a differential mechanism. The differential action of the power split mechanism 3 mechanically transmits a main portion of the power from the engine 2 to the drive shafts 6a and 6b, and electrically transmits the remaining portion of the power from the engine 2 using the electrical path from the first motor-generator MG1 to the second motor-generator MG2. This provides a function as an electrical-type continuously variable transmission where the gear shift ratio is electrically changed. Accordingly, without depending on the rotation speed and the torque of the drive shafts 6a and 6b (the ring gear shaft 3e), this allows freely manipulating the engine rotation speed and the engine torque and allows obtaining the operating state of the engine 2 with the optimized fuel consumption rate while obtaining the driving force required for the drive shafts 6a and 6b.

During high-speed running, the electric power from the battery 24 is additionally supplied to the second motor-generator MG2 to increase the output of this second motor-generator MG2 so as to additionally apply a driving force (driving force assistance; power running) to the drive shafts 6a and 6b.

Furthermore, during deceleration, the second motor-generator MG2 functions as an electric generator, and then generates regenerative power and stores the recovered electric power in the battery 24. Here, in the case where the amount of charge (the above-described remaining capacity; SOC) of the battery 24 is reduced and charging is especially required, the output of the engine 2 is increased to increase the power generation amount by the first motor-generator MG1 so as to increase the amount of charge to the battery 24. During low-speed running, a control for increasing the driving amount of the engine 2 may be performed as necessary, for example, in the case where charging the battery 24 is required as described above, in the case where an auxiliary machine such as an air conditioner is driven, and in the case where the temperature of the cooling water for the engine 2 is increased to a predetermined temperature.

In the hybrid vehicle 1 of this embodiment, the engine 2 is stopped to improve the fuel consumption depending on the operating state of the vehicle and the state where of the battery 24. Afterward, the operating state of the hybrid vehicle 1 and the state of the battery 24 are detected again so as to restart the engine 2. Accordingly, in the hybrid vehicle 1, intermittent operation (operation where engine stop and restart are repeated) of the engine 2 is performed even when the power switch 51 is in an ON position.

In this embodiment, the engine intermittent operation is, for example, permitted in the case where the gear shift position during the S mode is equal to or more than an engine-intermittent-operation permitting stage (engine intermittence permission) and prohibited in the case where the gear shift position during the S mode is lower than the engine-intermittent-operation permitting stage (engine intermittent prohibition).

### -Basic Control in Hybrid Vehicle-

Next, a basic control of the hybrid vehicle 1 configured as described above will be described.

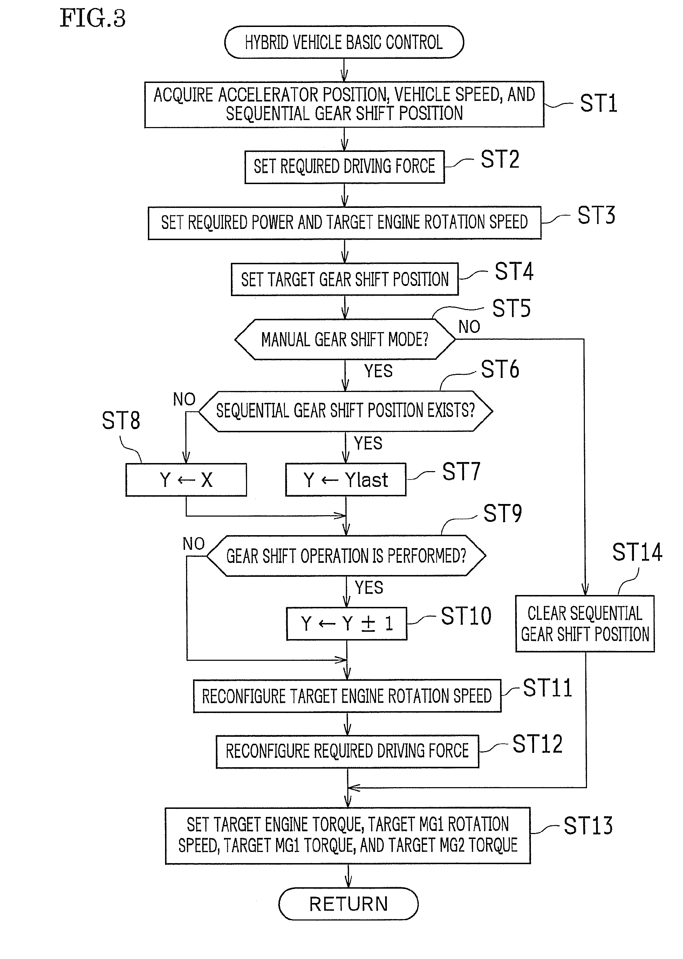

FIG. 3 is a flowchart illustrating a procedure of the basic control of the hybrid vehicle 1. This flowchart is repeatedly executed at a predetermined time interval (for example, every several msec) in the hybrid ECU 10.

In step ST1, the accelerator position Acc, the vehicle speed V (correlated with the rotation speed of the ring gear shaft 3e), and a sequential gear shift position (a gear shift position being detected by the shift position sensor 50 in the case where the last routine is the manual gear shift mode) Ylast in the last routine are acquired. The accelerator position Acc is obtained based on the output signal from the accelerator position sensor 52. The vehicle speed V is obtained based on the output signal from the vehicle speed sensor 54.

After the various pieces of information are acquired in step ST1, the process proceeds to step ST2. Subsequently, a required driving force is set based on the input accelerator position Acc and the vehicle speed V. In this embodiment, a required-driving-force setting map is stored in the ROM 41. In required-driving-force setting map, a relationship between the accelerator position Acc, the vehicle speed V, and the required driving force are preliminarily determined. This required-driving-force setting map is referred to extract the required driving force corresponding to the accelerator position Acc and the vehicle speed V.

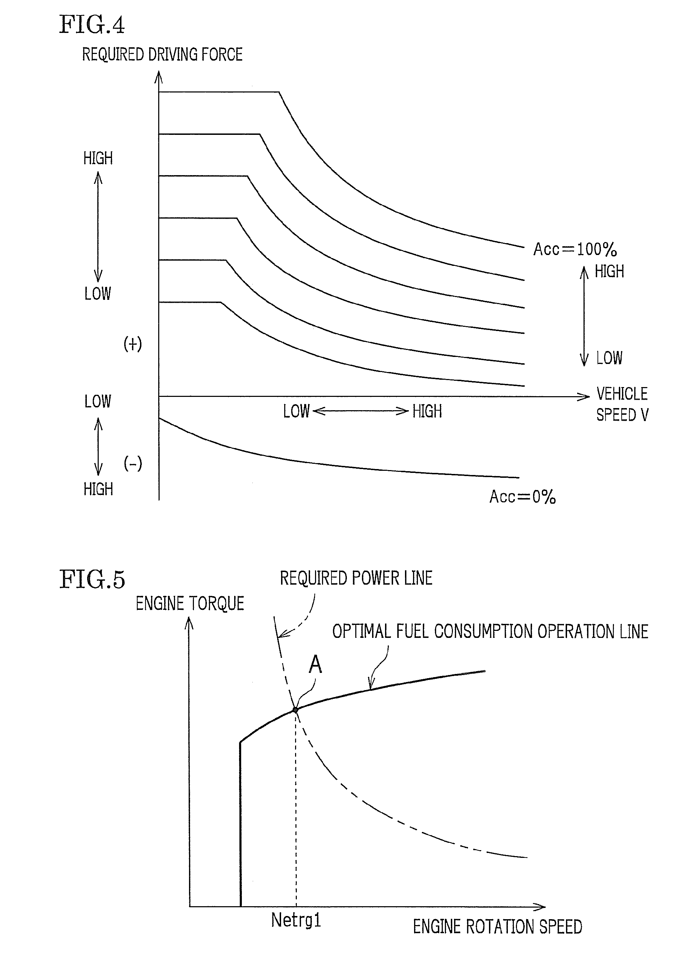

FIG. 4 illustrates one example of the required-driving-force setting map. This required-driving-force setting map is a map for obtaining a driving force required by the driver using the vehicle speed V and the accelerator position Acc as parameters, and specifies a plurality of characteristic lines corresponding to different accelerator positions Acc. Among these characteristic lines, the characteristic line illustrated as the highest stage corresponds to the case where the accelerator position Acc is fully open (Acc = 100%). The characteristic line corresponding to the case where the accelerator position Acc is fully closed is illustrated as "Acc = 0%" in the drawing.

After the required driving force is set based on this required-driving-force setting map, the process proceeds to step ST3. Subsequently, a required power Pe required for the engine 2 and a target engine rotation speed Netrg are set. Specifically, the required power Pe is set based on the required driving force set in step ST2 described above and the vehicle speed V detected by the vehicle speed sensor 54. The target engine rotation speed Netrg is set based on the set required power Pe and a target-engine-rotation-speed setting map (a map for setting the target engine rotation speed Netrg) illustrated in FIG. 5. Specifically, the target engine rotation speed Netrg is set based on the optimal fuel consumption operation line of the engine 2 and the required power line (constant power line; the line illustrated by the two-dot chain line in the drawing) that are set in this target-engine-rotation-speed setting map. This optimal fuel consumption operation line is an operation line for efficiently operating the engine 2. The optimal fuel consumption operation line is preliminarily determined as a restriction on setting the driving operation point for normal running (for HV running). Accordingly, the driving operation point of the engine 2 for satisfying the above-described required power Pe and efficiently operating the engine 2 is obtained as the intersection point (a point A in the drawing) between this optimal fuel consumption operation line and the above-described required power line that is the correlation curve between an engine rotation speed Ne and a torque Te. In the case illustrated in FIG. 5, the target engine rotation speed is obtained as Netrg1.

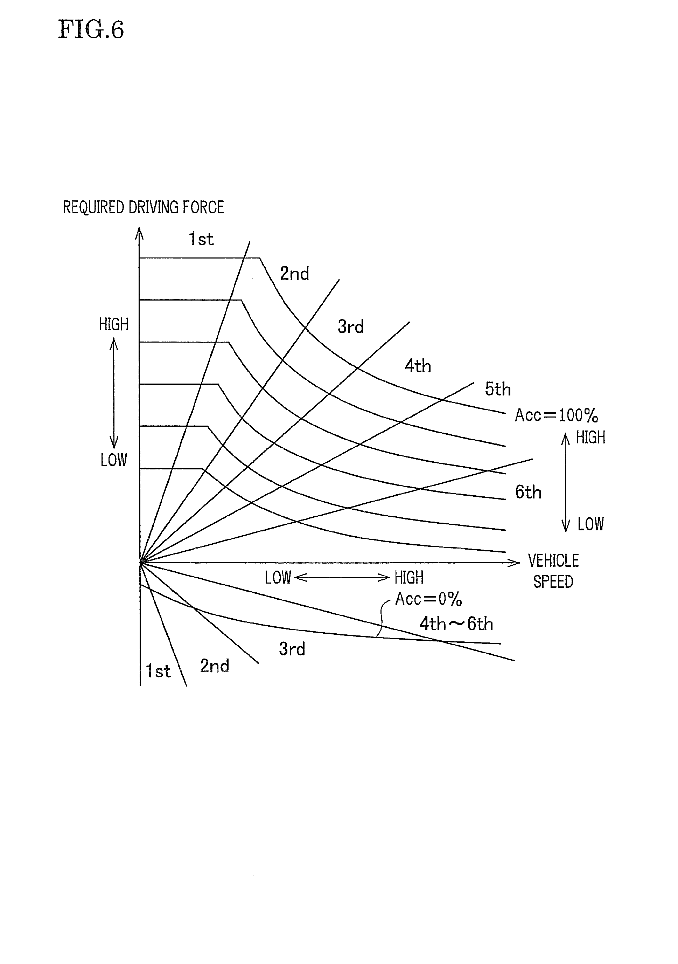

After the required power Pe and the target engine rotation speed Netrg for the engine 2 are thus set, the process proceeds to step ST4. Subsequently, a target gear shift position X is set. Specifically, the target gear shift position X is set based on the set required driving force described above (in step ST2), the accelerator position Acc detected by the accelerator position sensor 52, the vehicle speed V detected by the vehicle speed sensor 54, and a target-gear-shift-position setting map illustrated in FIG. 6. This target-gear-shift-position setting map in FIG. 6 is a map where the required driving force, the vehicle speed V, and the accelerator position Acc are used as parameters and a plurality of regions (regions from a first gear shift position (1st) to a sixth gear shift position (6th) partitioned by gear-shift switching lines) are set for obtaining an appropriate gear shift position (a target gear shift position (hereinafter referred to as "a recommended gear shift position" in some cases) with the optimal fuel consumption) corresponding to those required driving force, vehicle speed V, and accelerator position Acc. The target-gear-shift-position setting map is stored in the ROM 41 of the hybrid ECU 10.

In the target-gear-shift-position setting map according to this embodiment, the driving force required in an accelerator-on state (Acc > 0%) is set to be higher for a lower gear position (a gear position with a larger gear shift ratio) in the case of the same vehicle speed.

The driving force required in an accelerator-off state (Acc = 0%) is set to be lower (as a larger negative driving force) for a lower gear position (a gear position with a larger gear shift ratio) from the first gear shift position (1st) to the fourth gear shift position (4th). From this fourth gear shift position (4th) to the sixth gear shift position (6th), the respective driving forces required in the accelerator-off state coincide with one another. Accordingly, in the accelerator-off state, the driving force changes each time the selected gear shift position is changed from the first gear shift position (1st) to the fourth gear shift position (4th). In contrast, from the fourth gear shift position (4th) to the sixth gear shift position (6th), the driving force does not change even when the selected gear shift position is changed.

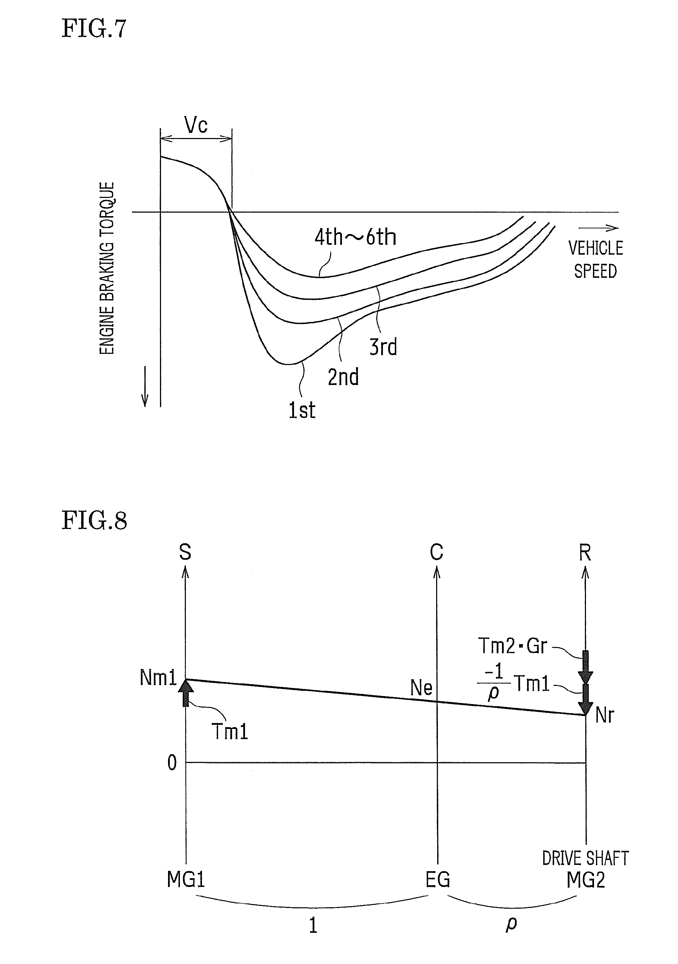

Accordingly, the magnitude of the engine braking torque (the torque acting as a braking force to the drive shafts 6a and 6b) generated when the acceleration is turned off is larger for a lower gear position from the first gear shift position (1st) to the fourth gear shift position (4th) while being approximately constant from the fourth gear shift position (4th) to the sixth gear shift position (6th) at a predetermined vehicle speed or more as illustrated in FIG. 7.

After the target gear shift position X is set, the process proceeds to step ST5. Subsequently, it is determined whether or not the current running mode is the manual gear shift mode (S mode), that is, whether or not the manual gear shift mode is being executed. Specifically, the position of the shift lever 91 is detected by the shift position sensor 50, and it is determined whether or not the detected position of the shift lever 91 is the S position.

Subsequently, in the case where the mode is not the manual gear shift mode and determination of NO is made in step ST5, the process proceeds to step ST14 to clear the sequential gear shift position Ylast in the last routine. That is, it is determined that the shift lever 91 is operated to a position other than the S position (including the "+" position and the "-" position) by operation of the driver or is being operated to a position other than the S position, and then the sequential gear shift position Ylast is cleared.

Subsequently, the process proceeds to step ST13 to set a target engine torque TeTrg, a target MG1 rotation speed (a target rotation speed of the first motor-generator MG1; a command rotation speed) Nmltrg, a target MG1 torque (a target torque of the first motor-generator MG1; a command torque) Tm1trg, a target MG2 torque (a target torque of the second motor-generator MG2; a command torque) Tm2trg.

Here, the target engine torque TeTrg, the target MG1 rotation speed Nmltrg, the target MG1 torque Tm1trg, and the target MG2 torque Tm2trg are set based on the required driving force set in step ST2 described above and the required power Pe and the target engine rotation speed Netrg that are set in step ST3 described above.

Specifically, the required power Pe set in step ST3 described above is divided by the target engine rotation speed Netrg so as to set the target engine torque TeTrg. The target engine rotation speed Netrg that is set as described above, the rotation speed Nr of the ring gear shaft 3e, and a gear ratio p (the number of teeth of the sun gear 3a / the number of teeth of the ring gear 3b) of the power split mechanism 3 are used to calculate the target MG1 rotation speed Nmltrg that is the target rotation speed of the first motor-generator MG1. Subsequently, the above-described target MG1 torque (command torque) Tm1trg as the target torque of the first motor-generator MG1 is set based on this calculated target MG1 rotation speed Nmltrg and the current MG1 rotation speed Nm1. Furthermore, the deviation between: the input/output limits Win and Wout of the battery 24; and the power consumption (generated electric power) of the first motor-generator MG1 obtained as a product of the above-described target MG1 torque Tm1trg and the rotation speed Nm1 of the current first motor-generator MG1, is divided by the rotation speed Nm2 of the second motor-generator MG2 so as to calculate the torque limits Tmin and Tmax as upper and lower limits of the torque that is allowed to be output from the second motor-generator MG2. Subsequently, a temporary motor torque Tm2tmp as a torque to be output from the second motor-generator MG2 is calculated based on the target engine torque TeTrg, the target MG1 torque Tm1trg, and the gear ratio p of the power split mechanism 3 described above, and a gear ratio Gr of the reduction mechanism 7. Subsequently, the target MG2 torque Tm2trg that is the command torque of the second motor-generator MG2 is set as a value obtained by limiting the temporary motor torque Tm2tmp using the torque limits Tmin and Tmax calculated described above. Thus, setting the target MG2 torque Tm2trg causes setting the torque output to the ring gear shaft 3e as a torque limited within the range of the input/output limits Win and Wout of the battery 24.

The target engine rotation speed Netrg and the target engine torque TeTrg that are set as described above are output to the engine ECU 11. The target MG1 rotation speed Nmltrg, the target MG1 torque Tm1trg, and the target MG2 torque Tm2trg that are set as described above are output to the motor ECU 13. The engine ECU 11 performs operation control of the engine 2 based on the set target engine rotation speed Netrg and target engine torque TeTrg. The motor ECU 13 drivingly controls the first motor-generator MG1 based on the set target MG1 rotation speed Nmltrg and target MG1 torque Tm1trg, and drivingly controls the second motor-generator MG2 based on the set target MG2 torque Tm2trg.

On the other hand, in the case where the manual gear shift mode is being executed and determination of YES is made as the determination in step ST5, the process proceeds to step ST6 to determine whether or not the last sequential gear shift position Ylast exists. Here, it is determined whether or not the last sequential gear shift position Ylast exists so as to determine whether the state is a state at the start of the manual gear shift mode or a state where the manual gear shift mode is ongoing.

When the last sequential gear shift position Ylast exists and the determination of YES is made in step ST6, the process proceeds to step ST7 to set this sequential gear shift position Ylast as the current sequential gear shift position Y. That is, based on the determination that the manual gear shift mode is ongoing, the sequential gear shift position Ylast set in the last routine is set as the current sequential gear shift position Y.

On the other hand, in the case where the last sequential gear shift position Ylast does not exist and the determination of NO is made in step ST6, the process proceeds to step ST8 to set the target gear shift position X set in step ST4 described above as the sequential gear shift position Y. That is, based on the determination that the manual gear shift mode has been just started, the target gear shift position X (the target gear shift position X set in step ST4) set based on the required driving force and similar parameter is set as the sequential gear shift position Y at the start of the manual gear shift mode.

After the sequential gear shift position Y is thus set, the process proceeds to step ST9 to determine whether or not the gear shift operation by the driver is performed. Here, in the case where the shift position sensor 50 has detected an operation of the shift lever 91 positioned in the S position to the "+" position or the "-" position due to the operation of the driver, the determination of YES is made.

When the gear shift operation by the driver is performed and then the determination of YES is made in step ST9, the process proceeds to step ST10 to change the sequential gear shift position Y based on the gear shift operation. Here, in the case where the shift position sensor 50 has detected that the shift lever 91 positioned in the S position is operated to the "+" position due to the operation of the driver, the sequential gear shift position Y is set by increasing one stage (one speed) from the currently set sequential gear shift position Y (as Y = Y + 1). In the case where the shift position sensor 50 has detected that the shift lever 91 positioned in the S position is operated to the "-" position due to the operation of the driver, the sequential gear shift position Y is set by decreasing one stage (one speed) from the currently set sequential gear shift position Y (as Y = Y - 1). After the sequential gear shift position Y is thus changed, the process proceeds to step ST11. Here, in the case where the gear shift operation by the driver is not performed and then the determination of NO is made in step ST9, the process proceeds to step ST11 without changing the sequential gear shift position Y.

In step ST11, the target engine rotation speed Netrg is reconfigured based on the set sequential gear shift position Y and the above-described acquired vehicle speed V. Here, in association with the determination that the mode is the manual gear shift mode, the target engine rotation speed Netrg is set based on the set sequential gear shift position Y (the last sequential gear shift position Y (= Ylast) in the case where gear shifting is not performed, or the sequential gear shift position Y (= Y ± 1) after gear shifting in the case where gear shifting is performed) and the vehicle speed V acquired by the vehicle speed sensor 54. For example, a gear shift ratio is preliminarily set for each gear shift position described above. The target engine rotation speed Netrg is set based on the gear shift ratio corresponding to the gear shift position, which coincides with the sequential gear shift position Y, and the acquired vehicle speed V.

Subsequently, the process proceeds to step ST12 to reconfigure the required driving force based on the target engine rotation speed Netrg set as described above. Here, in association with the determination that the mode is the manual gear shift mode, the required driving force is set based on the target engine rotation speed Netrg that is set based on the sequential gear shift position Y set as described above.

Subsequently, the process proceeds to step ST13 to set the target engine torque TeTrg, the target MG1 rotation speed Nmltrg, the target MG1 torque Tm1trg, and the target MG2 torque Tm2trg, similarly as described above. Here, in association with the determination that the manual gear shift mode is being executed, the target engine torque TeTrg, the target MG1 rotation speed Nmltrg, the target MG1 torque Tm1trg, and the target MG2 torque Tm2trg are set based on the target engine rotation speed Netrg set based on the sequential gear shift position Y that is set in step ST11 as described above and the required driving force set in step ST12.

As described above, in the hybrid vehicle 1 according to this embodiment, in the case where the mode is not the manual gear shift mode, the required driving force is set based on the accelerator position Acc and the vehicle speed V, and then the target engine rotation speed Netrg is set based on the required driving force. The operation control of the engine 2 and the driving control of the respective motor-generators MG1 and MG2 are performed based on the set required driving force and target engine rotation speed Netrg. On the other hand, in the case where the mode is the manual gear shift mode, the target engine rotation speed Netrg is set based on the set sequential gear shift position Y and the vehicle speed V, and the required driving force is set based on the set target engine rotation speed Netrg due to the operation of the shift lever 91 by the driver. The operation control of the engine 2 and the driving control of the respective motor-generators MG1 and MG2 are performed based on these set target engine rotation speed Netrg and required driving force.

### -Regenerative Operation-

In the hybrid vehicle 1 according to this embodiment, for example, when the accelerator pedal is turned off from on (the depression is released) during running and then the hybrid vehicle 1 becomes the driven state, the fuel supply to the engine 2 is stopped to temporarily stop the operation of the engine 2 such that the motor ECU 13 performs a regenerative operation for performing regenerative power generation of the second motor-generator MG2.

Specifically, in the case where the above-described SOC does not have the maximum value, the second motor-generator MG2 causes the torque to act in the negative direction. The second motor-generator MG2 receives the rotational force from the drive shafts 6a and 6b via the reduction mechanism 7. Accordingly, this second motor-generator MG2 generates electric power. This generated electric power (AC power) of the second motor-generator MG2 is converted into a DC power by the inverter 22 and then supplied to the boost converter 23. Subsequently, this electric power supplied from the inverter 22 is converted into a voltage by the boost converter 23 and then charged to the battery 24.

FIG. 8 is a collinear diagram illustrating a dynamic relationship between rotation speeds and torques of the respective rotational elements of the power split mechanism 3 during this regenerative operation (regenerative power generation). In the drawing, the S axis on the left side denotes the rotation speed of the sun gear 3a as the rotation speed Nm1 of the motor-generator MG1. The C axis denotes the rotation speed of the planetary carrier 3d as the rotation speed Ne of the engine 2. The R axis denotes the rotation speed Nr of the ring gear shaft 3e as the value obtained by dividing the rotation speed Nm2 of the second motor-generator MG2 by the gear ratio Gr of the reduction mechanism 7. Here, the respective two thick arrows on the R axis denote the torque, which is the torque Tm1 output from the motor MG1, acting on the ring gear shaft 3e, and the torque, which is the torque Tm2 output from the second motor-generator MG2, acting on the ring gear shaft 3e via the reduction mechanism 7.

### -Gear-Shift Instruction Device-

In the hybrid vehicle 1 according to this embodiment, a gear-shift instruction device that performs a gear shift instruction (gear shift guide) in the manual gear shift mode (S mode) is mounted. The gear shift instruction prompts gear shifting to the driver. This gear-shift instruction device will be described below.

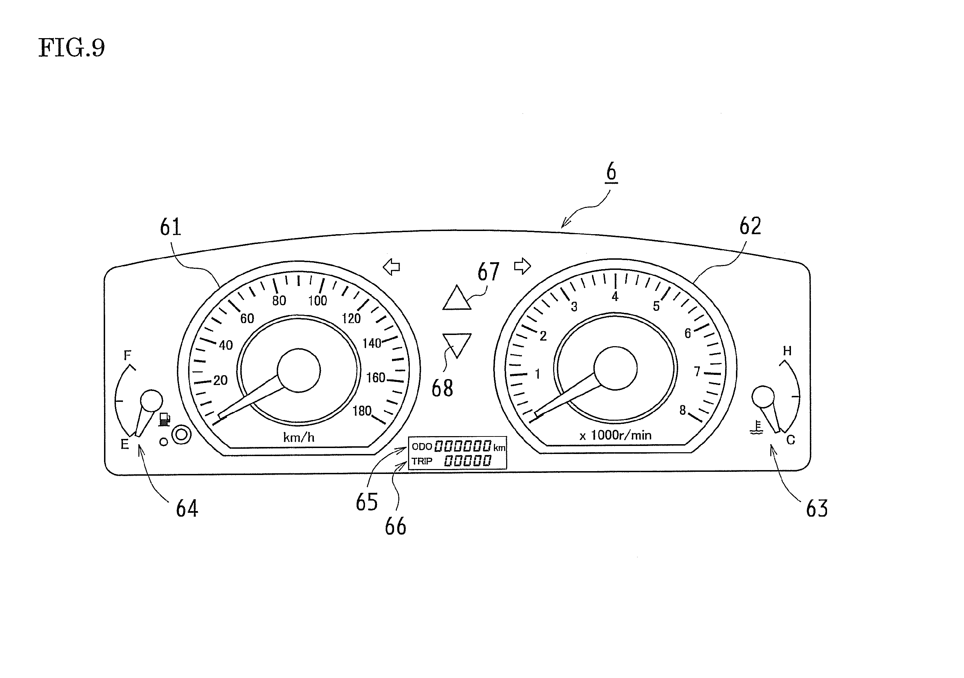

As illustrated in FIG. 9, in a combination meter 6 arranged in front of the driver's seat in the vehicle cabin, a speedometer 61, a tachometer 62, a water temperature gauge 63, a fuel gauge 64, an odometer 65, a trip meter 66, various warning indicator lamps, and similar member are arranged.

In this combination meter 6, as displaying portions for instructing selection of an appropriate gear shift position (gear position) to ensure improvement in fuel consumption corresponding to the running state of the hybrid vehicle 1 and similar effect, a shift-up lamp 67 and a shift-down lamp 68 are arranged. The shift-up lamp 67 is turned on during instruction of up-shifting the gear shift position. The shift-down lamp 68 is turned on during instruction of down-shifting the gear shift position. These shift-up lamp 67 and shift-down lamp 68 are constituted of, for example, LEDs and controlled to be turned on and off by the GSI-ECU 16 (see FIG. 1). These shift-up lamp 67, shift-down lamp 68, GSI-ECU 16, and hybrid ECU 10 constitute a gear-shift instruction device according to the present invention. Here, as a possible configuration, the GSI-ECU 16 may be excluded, and the above-described engine ECU 11 or a power management ECU (not illustrated) may control turning on and off the shift-up lamp 67 and the shift-down lamp 68.

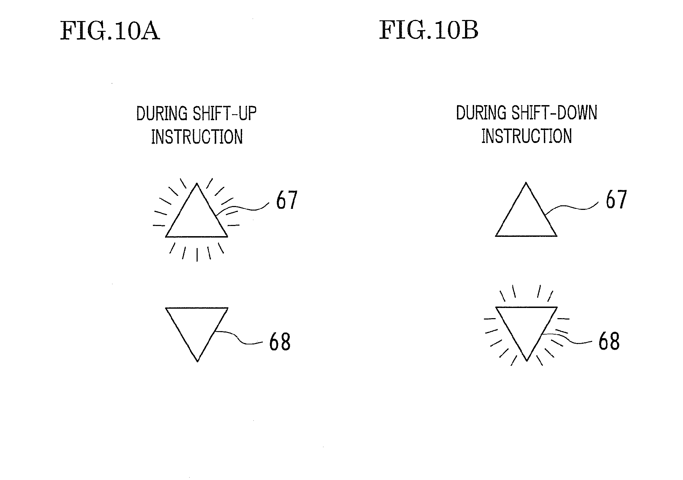

As the basic control of this gear-shift instruction device, the current vehicle speed V is obtained from the output signal of the vehicle speed sensor 54, and the current accelerator position Acc is obtained from the output signal of the accelerator position sensor 52. Using these vehicle speed V and accelerator position Acc, the required-driving-force setting map illustrated in FIG. 4 is referred to obtain the required driving force. Additionally, based on this required driving force, the vehicle speed V, and the accelerator Acc described above, the target-gear-shift-position setting map illustrated in FIG. 6 is referred to obtain the recommended gear shift position (target gear shift position). Subsequently, the recommended gear shift position and the current gear shift position are compared with each other to determine whether or not the recommended gear shift position and the current gear shift position coincide with each other. Subsequently, in the case where the recommended gear shift position and the current gear shift position coincide with each other, the gear shift instruction is not performed. That is, both of the shift-up lamp 67 and the shift-down lamp 68 are not turned on. On the other hand, in the case where the current gear shift position is a lower gear shift position than the recommended gear shift position, a control signal for issuing the shift-up instruction is transmitted from the hybrid ECU 10 to the GSI-ECU 16 so as to turn on the shift-up lamp 67 (see FIG. 10A). In the case where the current gear shift position is a higher gear shift position than the recommended gear shift position, a control signal for issuing the shift-down instruction is transmitted from the hybrid ECU 10 to the GSI-ECU 16 so as to turn on the shift-down lamp 68 (see FIG. 10B).

The gear-shift instruction device in this embodiment has the configuration that performs the operation for prompting the driver to change the gear shift position similarly as described above during EV running where the drive shafts 6a and 6b are driven by the above-described second motor-generator MG2 alone.

### -Gear Shift Instruction Control during Regeneration-

Next, a description will be given of a gear shift instruction control during the above-described regenerative operation that is an operation as a feature of this embodiment.

Firstly, a description will be given of the outline of this gear shift instruction control during regenerative operation. When the hybrid vehicle 1 becomes a driven state due to release of the depression of the accelerator pedal (to turn off the accelerator) or similar operation during running, the regenerative operation is started as described above. In this regenerative operation, in the case where the current running mode is the manual gear shift mode, in the situation where the change in driving force before and after the gear shifting becomes large if the gear shift instruction is performed and the driver performs the gear shift operation in accordance with this gear shift instruction, the above-described gear shift instruction by the gear-shift instruction device is not performed (the operation for prompting the driver to change the gear shift position is not performed in the present invention). Accordingly, this prevents the driver from feeling discomfort due to a significant change in driving force in association with the performance of the gear shift operation in accordance with the gear shift instruction. On the other hand, in the case where the change in driving force before and after gear shifting is comparatively small or in the case where the change in driving force is little, the gear shift instruction is performed (permitted). Furthermore, even in the situation where the change in driving force before and after gear shifting may become large, the gear shift instruction is performed (permitted) in the situation where a vehicle occupant is less likely to recognize this change in driving force. Specifically, for example, it is the case where the driver is performing the depression operation of the brake pedal and the braking force is acting on the vehicle. That is, in this case, in the case where the magnitude of the braking force in association with the depression operation of the brake pedal is larger than that of the change in driving force in association with gear shifting, the vehicle occupant is less likely to recognize this change in driving force in association with gear shifting. Accordingly, under this situation, the gear shift instruction is performed (permitted).

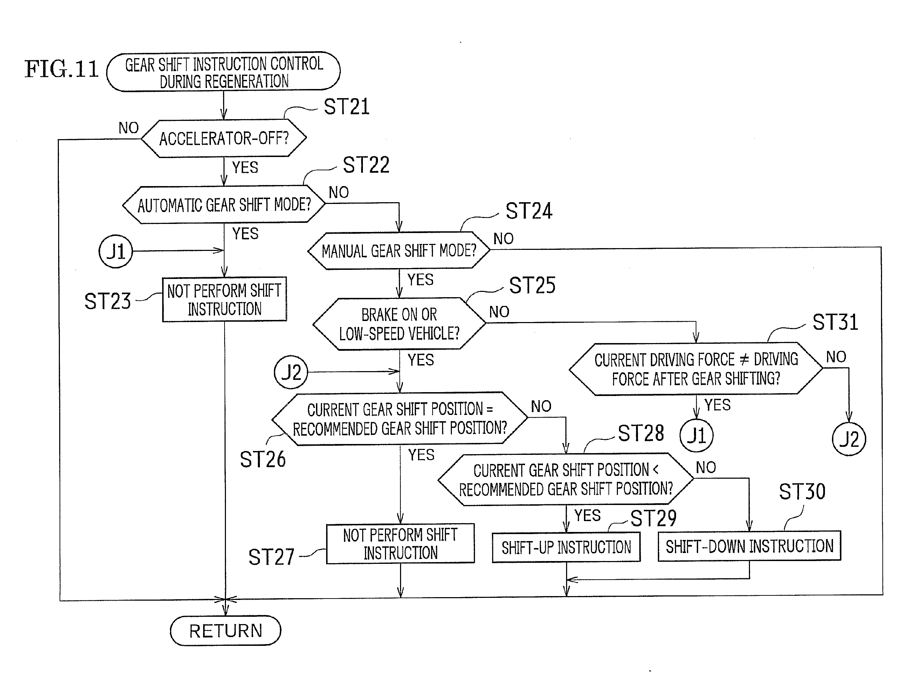

The following specifically describes this gear shift instruction control during regeneration through a flowchart in FIG. 11. This flowchart is repeatedly executed at a predetermined time interval (for example, every several msec) during running of the hybrid vehicle 1.

Firstly, in step ST21, it is determined whether or not a depression releasing operation of the accelerator pedal (accelerator-OFF operation) is performed during vehicle running. In the case where the accelerator-OFF operation is not performed and then the determination of NO is made in step ST21, the process returns. In this case, when the current running mode is the automatic gear shift mode, the above-described gear shift instruction operation is not performed. On the other hand, when the current running mode is the manual gear shift mode, the above-described ordinary gear shift instruction operation is performed. That is, as described above, the gear shift instruction operation is performed by comparison between the recommended gear shift position and the current gear shift position.

In the case where the accelerator-OFF operation is performed and then the determination of YES is made in step ST21, the above-described regenerative operation is performed as a hybrid system and then the process proceeds to step ST22 to determine whether or not the current running mode is the automatic gear shift mode, that is, whether or not the accelerator-OFF operation is performed during running in the automatic gear shift mode. Specifically, the position of the shift lever 91 is detected by the shift position sensor 50. Subsequently, it is determined whether or not the detected position of the shift lever 91 is the D position.

Subsequently, in the case where the current running mode is the automatic gear shift mode and then the determination of YES is made in step ST22, the process proceeds to step ST23. Subsequently, the above-described gear shift instruction operation is not performed (the shift instruction is not performed), both of the shift-up lamp 67 and the shift-down lamp 68 are not turned on. That is, in the case of the automatic gear shift mode, the gear shift position (the target gear shift position with the optimal fuel consumption) obtained in step ST4 illustrated in the above-described flowchart of FIG. 3 is automatically set. Accordingly, the gear shift instruction is not performed.

On the other hand, in the case where the current running mode is not the automatic gear shift mode and then the determination of NO is made in step ST22, the process proceeds to step ST24 to determine whether or not the current running mode is the manual gear shift mode, that is, whether or not the accelerator-OFF operation is performed during running in the manual gear shift mode. Specifically, also in this case, the position of the shift lever 91 is detected by the shift position sensor 50 to make the determination. That is, it is determined whether or not the detected position of the shift lever 91 is the S position.

Subsequently, in the case where the current running mode is the manual gear shift mode and then the determination of YES is made in step ST24, the process proceeds to step ST25 to determine whether or not at least any one of the condition where the depression operation of the brake pedal is performed (brake ON) and the condition where the vehicle speed is equal to or less than a predetermined vehicle speed is satisfied.

The determination whether or not the brake pedal is being depressed is made based on the above-described brake-pedal-position signal from the brake pedal sensor 53. In this case, in the case where the depression amount of the brake pedal is equal to or more than a predetermined amount (equal to or more than the amount where the vehicle occupant feels little change in driving force even if this change in driving force is caused by changing the gear shift position due to sufficient deceleration of the vehicle), the determination of YES is made in step ST25. For example, each of the amount of change in driving force in the case where the gear shift position is changed to the shift-up side and the amount of change in driving force in the case where the gear shift position is changed to the shift-down side (for example, which is provided from the map or similar information where the amount of change in driving force in the case where gear shifting is performed is preliminarily stored using the gear shift position and the vehicle speed as parameters) is compared with the braking force generated due to the current depression of the brake pedal. Subsequently, in the case where this braking force is larger than each amount of change in driving force, the determination of YES is made in this step ST25.

Also in the case where the vehicle speed is low to the degree of the vehicle speed obtained due to the creep phenomenon of the engine 2 (corresponding to the words "a vehicle speed at which a driving force of a driving force source for vehicle running becomes large compared with a braking torque" in the present invention), the determination of YES is made in step ST25. This vehicle speed obtained due to the creep phenomenon is a vehicle speed at which the creep torque of the engine 2 is larger than the negative torque due to the engine brake in association with turning off of the accelerator described above, and is, for example, in a range of the vehicle speed Vc in FIG. 7.

When the determination of YES is made in step ST25, the process proceeds to step ST26. Subsequently, the current vehicle speed V is obtained from the output signal of the vehicle speed sensor 54. Additionally, the current accelerator position Acc is obtained from the output signal of the accelerator position sensor 52. These vehicle speed V and accelerator position Acc are used to obtain the required driving force with reference to the required-driving-force setting map illustrated in FIG. 4. Based on this required driving force, the vehicle speed V, and the accelerator Acc described above, the recommended gear shift position (target gear shift position) is obtained with reference to the target-gear-shift-position setting map illustrated in FIG. 6. Subsequently, the recommended gear shift position and the current gear shift position are compared with each other so as to determine whether or not the recommended gear shift position and the current gear shift position are the same.

In the case where the recommended gear shift position and the current gear shift position coincide with each other (the current gear shift position = the recommended gear shift position) and the determination of YES is made in step ST26, the process proceeds to step ST27. Subsequently, the shift instruction by the gear-shift instruction device described above is not performed.

Here, the current gear shift position can be recognized by a calculated gear shift ratio. For example, this gear shift ratio is calculated as a ratio (gear shift ratio) between the rotation speed (engine rotation speed) of the input shaft (the planetary carrier 3d) of the power split mechanism 3 and the rotation speed of the ring gear shaft 3e (recognized by the output signal of the vehicle speed sensor 54 or the output-shaft rotation speed). Alternatively, based on the output signal of the shift position sensor 50, the current gear shift position can be recognized by the gear shift position (the gear shift position set in step ST7 or ST8 in the above-described flowchart of FIG. 3) set when the shift lever 91 is operated to the S position or by the gear shift position (the gear shift position set in step ST10 in the above-described flowchart of FIG. 3) set by the operation to the "+" position or the "-" position in the S position.

In the case where the recommended gear shift position and the current gear shift position do not coincide with each other and then the determination of NO is made in step ST26, the process proceeds to step ST28. In step ST28, it is determined whether or not the current gear shift position is a lower gear shift position than the recommended gear shift position (the current gear shift position < the recommended gear shift position). In the case where the determination result is YES, the process proceeds to step ST29.

In step ST29, a control signal for issuing an shift-up command is transmitted from the hybrid ECU 10 to the GSI-ECU 16 so as to turn on the shift-up lamp 67 (see FIG. 10A). Subsequently, when the driver operates the shift lever 91 to the "+" position or operates the shift-up paddle switch 9c in response to this shift-up instruction (gear shift guide) by turning on the shift-up lamp 67, an shift-up operation is performed in the hybrid system. At the time point when the current gear shift position and the recommended gear shift position coincide with each other by this shift-up operation (at the time point when the determination result in step ST26 becomes YES), the shift-up lamp 67 is turned off and the shift instruction by the above-described gear-shift instruction device is not performed (in step ST27).

In the case where the determination results in step ST26 and step ST28 described above are both NO, that is, in the case where the current gear shift position is a higher gear shift position than the recommended gear shift position (the current gear shift position > the recommended gear shift position), the process proceeds to step ST30.

In step ST30, a control signal for issuing a down-shift command is transmitted from the hybrid ECU 10 to the GSI-ECU 16, and the shift-down lamp 68 is turned on (see FIG. 10B). Subsequently, when the driver operates the shift lever 91 to the "-" position or operates the shift-up paddle switch 9d in response to this shift-up instruction (gear shift guide) by turning on the shift-up lamp 67, a shift-down operation is performed in the hybrid system. At the time point when the current gear shift position and the recommended gear shift position coincide with each other by this shift-down operation (at the time point when the determination result in step ST26 becomes YES), the shift-down lamp 68 is turned off and the shift instruction by the above-described gear-shift instruction device is not performed (in step ST27).

On the other hand, in the case where the current running mode is the manual gear shift mode, the depression operation of the brake pedal is not performed, and the vehicle speed exceeds the predetermined vehicle speed, the determination of NO is made in step ST25 and then the process proceeds to step ST31. In this step ST31, it is determined whether or not the current driving force and the driving force after gear shifting where the gear shifting is performed do not coincide with each other ([the current driving force ≠ the driving force after gear shifting] is satisfied).

Here, the above-described current driving force is extracted based on the accelerator position Acc detected by the accelerator position sensor 52, the vehicle speed V detected by the vehicle speed sensor 54, the current gear shift position, and the map illustrated in FIG. 6. Alternatively, the current driving force may be obtained by a different method.

On the other hand, the driving force after gear shifting is obtained by applying the gear shift position, which is shifted from the current gear shift position by one stage in a state where the current accelerator position Acc and vehicle speed V are maintained, to the map illustrated in FIG. 6. Alternatively, the driving force after gear shifting may be obtained by a different method.

Here, the operations for changing the gear shift position by one stage include a change on the shift-up side and a change on the shift-down side. Details of these operations will be described below.

In step ST31, in the case where the current driving force and the driving force after gear shifting do not coincide with each other and then the determination of YES is made in step ST31, the process proceeds to step ST23. Subsequently, the above-described gear shift instruction operation is not performed (the shift instruction is not performed). That is, it is determined that the driving force will be changed if the gear shift instruction is performed and then the driver performs the gear shift operation in accordance with this instruction. Accordingly, the gear shift instruction operation is not performed to reduce the gear shift operations that cause change in driving force.

On the other hand, in the case where the current driving force and the driving force after gear shifting coincide with each other and then the determination of NO is made in step ST31, the process proceeds to step ST26 to perform the above-described gear shift instruction operation (the gear shift instruction operation from step ST26 to step ST30). That is, the recommended gear shift position and the current gear shift position are compared with each other to determine whether or not the recommended gear shift position and the current gear shift position do not coincide with each other. Subsequently, in the case where the recommended gear shift position and the current gear shift position coincide with each other, the shift instruction is not performed (in ST27). On the other hand, in the case where the current gear shift position is a lower gear shift position than the recommended gear shift position, the shift-up instruction is performed (in step ST29). In the case where the current gear shift position is a higher gear shift position than the recommended gear shift position, the shift-down instruction is performed (in step ST30).

As described above, the operations for changing the gear shift position by one stage include the change on the shift-up side and the change on the shift-down side. That is, the driving forces after gear shifting include the driving force (hereinafter referred to as an "estimated shift-up-side driving force") in the case where up-shifting is performed and the driving force (hereinafter referred to as an "estimated shift-down-side driving force") in the case where down-shifting is performed.

In the above-described comparing determination in step ST31, the current driving force is compared with each of these estimated shift-up-side driving force and estimated shift-down-side driving force.

When the current driving force and the estimated shift-up-side driving force are compared with each other, that is, when it is determined whether or not the current driving force and the estimated shift-up-side driving force do not coincide with each other, in the case where these driving forces do not coincide with each other and then the determination of YES is made in step ST31, at least the gear shift instruction operation to the shift-up side (turning on of the shift-up lamp 67) is not performed in step ST23.

On the other hand, when the current driving force and the estimated shift-up-side driving force coincide with each other and then the determination of NO is made in step ST31, in the case where the current gear shift position is a lower gear shift position than the recommended gear shift position in the gear shift instruction operation from step ST26 to step ST30, the shift-up instruction is performed (in step ST29).

When the current driving force and the estimated shift-down-side driving force are compared with each other, that is, when it is determined whether or not the current driving force and the estimated shift-down-side driving force coincide with each other, in the case where these driving forces do not coincide with each other and then the determination of YES is made in step ST31, at least the gear shift instruction operation to the shift-down side (turning on of the shift-down lamp 68) is not performed in step ST23.

On the other hand, when the current driving force and the estimated shift-down-side driving force coincide with each other and then the determination of NO is made in step ST31, in the case where the current gear shift position is a higher gear shift position than the recommended gear shift position in the gear shift instruction operation from step ST26 to step ST30, the shift-down instruction is performed (in step ST30).

Thus, in the comparison operation between the current driving force and the driving force after gear shifting in step ST31, the comparison operation in the case where the up-shifting is assumed to be performed and the comparison operation in the case where down-shifting is assumed to be performed are concurrently performed. The shift-up instruction is not performed or performed and the shift-down instruction is not performed or performed corresponding to the respective comparison operations.

That is, in the case where the current driving force and the estimated shift-up-side driving force do not coincide with each other and in the case where the current driving force and the estimated shift-down-side driving force do not coincide with each other, both of the gear shift instruction operation to the shift-up side and the gear shift instruction operation to the shift-down side are not performed. In the case where the current driving force and the estimated shift-up-side driving force coincide with each other and in the case where the current driving force and the estimated shift-down-side driving force coincide with each other, both of the gear shift instruction operation to the shift-up side and the gear shift instruction operation to the shift-down side are permitted.

While in the above-described embodiment the current driving force and the driving force after gear shifting are read out from the map to compare these driving forces with each other, it may be possible to determine whether or not the driving force after gear shifting changes as follows.

That is, as described using FIG. 6, the driving force required in the accelerator-off state is set to be lower (with a larger negative driving force) for a lower gear position (a gear position with a larger gear shift ratio) from the first gear shift position (1st) to the fourth gear shift position (4th). From the fourth gear shift position (4th) to the sixth gear shift position (6th), the driving forces required in the accelerator-off state coincide with each other. That is, in the accelerator-off state, the driving force changes each time the selected gear shift position is changed from the first gear shift position (1st) to the fourth gear shift position (4th). On the other hand, the driving force is constant even when the selected gear shift position is changed from the fourth gear shift position (4th) to the sixth gear shift position (6th). Accordingly, the above-described determination in step ST31 is as follows.

That is, in the case where the current gear shift position is from the first gear shift position (1st) to the third gear shift position (3rd), the current driving force and the driving force after gear shifting do not coincide with each other in any of the gear shift operation on the shift-up side and the gear shift operation on the shift-down side. Accordingly, in this case, the gear shift instruction operation to the shift-up side (turning on of the shift-up lamp 67) is not performed, and the gear shift instruction operation to the shift-down side (turning on of the shift-down lamp 68) is also not performed.

In the case where the current gear shift position is the fourth gear shift position (4th), the current driving force and the estimated shift-up-side driving force coincide with each other while the current driving force and the estimated shift-down-side driving force do not coincide with each other. Accordingly, in this case, the gear shift instruction operation to the shift-up side (turning on of the shift-up lamp 67) is performed (permitted), and the gear shift instruction operation to the shift-down side (turning on of the shift-down lamp 68) is not performed.

In the case where the current gear shift position is the fifth gear shift position (5th), the current driving force and the estimated shift-up-side driving force coincide with each other and also the current driving force and the estimated shift-down-side driving force coincide with each other. Accordingly, in this case, the gear shift instruction operation to the shift-up side (turning on of the shift-up lamp 67) and the gear shift instruction operation to the shift-down side (turning on of the shift-down lamp 68) are both permitted (the recommended gear shift position and the current gear shift position are compared with each other to perform a lamp lighting operation).

Furthermore, in the case where the current gear shift position is the sixth gear shift position (6th), the current driving force and the estimated shift-down-side driving force coincide with each other. Accordingly, in this case, the gear shift instruction operation to the shift-down side (turning on of the shift-down lamp 68) is performed (permitted) (the recommended gear shift position and the current gear shift position are compared to perform a lamp lighting operation).

Thus, in this embodiment, in the case of the manual gear shift mode during regenerative operation where the accelerator is turned off, on the condition that the depression operation of the brake pedal is not performed and that the vehicle speed exceeds a predetermined vehicle speed, the above-described shift instruction by the gear-shift instruction device is not performed in the case where the current driving force and the driving force after gear shifting do not coincide with each other. This avoids causing excessive rotation of the engine in association with an increase in gear shift ratio in the case where the shift-down operation is performed in accordance with the shift-down instruction of the gear-shift instruction device, and avoids a change in sense of deceleration due to a decrease in braking force (negative driving force) by engine brake in association with a decrease in gear shift ratio in the case where the shift-up operation is performed in accordance with the shift-up instruction of the gear-shift instruction device. Consequently, this allows avoiding a situation where the driver feels discomfort due to the gear-shift-position changing instruction of the gear-shift instruction device.

In this embodiment, in the case where the respective amounts of change in driving force before and after the change of the gear shift position coincide with each other, the gear-shift-position changing instruction by the gear-shift instruction device is released from the non-performance state (performed). The present invention is not limited to this. The gear-shift-position changing instruction by the gear-shift instruction device may be released from the non-performance state in the case where the amount of change in driving force before and after the change of the gear shift position is equal to or less than a predetermined amount.

### (Modification 1)

Next, Modification 1 will be described. This modification is different from the above-described embodiment in the condition under which the above-described shift instruction by the gear-shift instruction device is not performed in the case of the manual gear shift mode during regenerative operation. The configuration and the control operation are otherwise similar to those of the above-described embodiment. Therefore, only the condition under which the shift instruction by the gear-shift instruction device is not performed will be described here.

The condition under which the shift instruction is not performed in this modification is as described below. The value obtained by adding a predetermined margin to the driving force after gear shifting (hereinafter referred to as, a "comparison-target driving force"), and the current driving force are compared with each other, and the shift instruction by the gear-shift instruction device is not performed when the current driving force is equal to or more than the comparison-target driving force. In other words, in the case where the current driving force is smaller than the comparison-target driving force, the shift instruction of the gear-shift instruction device is released from the non-performance state (the shift instruction is performed).

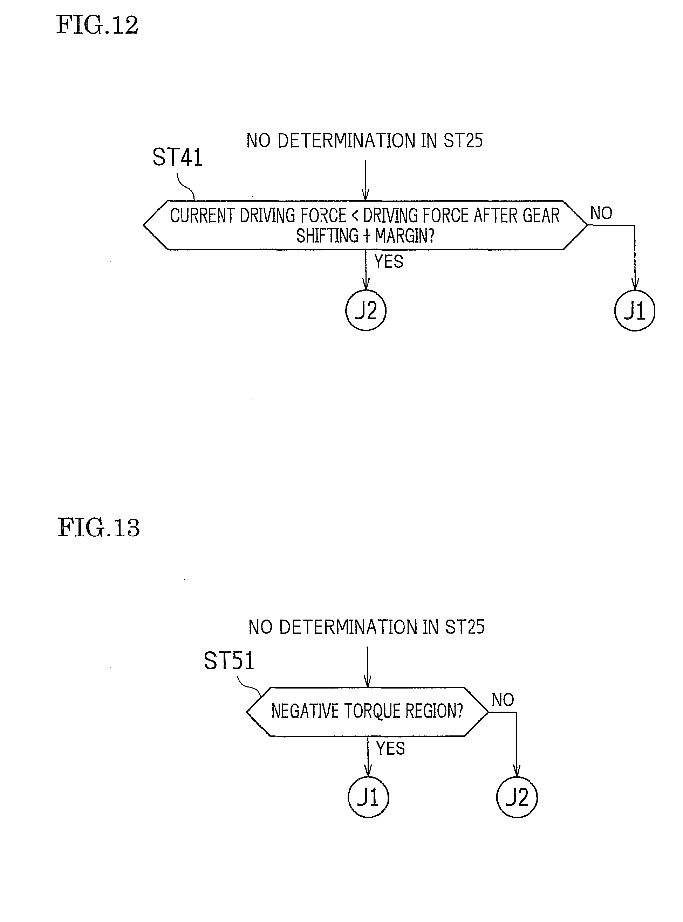

More specifically, in the flowchart illustrated in FIG. 11 in the above-described embodiment, the operation in step ST41 illustrated in FIG. 12 is performed after the determination of NO is made in step ST25. That is, it is determined whether or not the current driving force is smaller than the comparison-target driving force (the value obtained by adding the predetermined margin to the driving force after gear shifting).

In the case where the current driving force is equal to or more than the comparison-target driving force, the determination of NO is made in step ST41. Subsequently, the gear shift instruction operation is not performed in step ST23.

In the case where the current driving force is smaller than the comparison-target driving force, the determination of YES is made in step ST41. Subsequently, the operation proceeds to the operation from step ST26 described above.

The control operation described above is specialized in, particularly, the case where the driving force after gear shifting becomes small (in the case of up-shifting). In the case where the determination of NO is made in step ST41, the gear shift instruction operation to the shift-up side is not performed.

Here, the above-described margin is preliminarily set as necessary by experiment or simulation.

In this modification, the value obtained by adding the predetermined margin to the driving force after gear shifting (the comparison-target driving force) and the current driving force are compared with each other so that the shift instruction by the gear-shift instruction device is not performed in the case where the current driving force is equal to or more than the comparison-target driving force. Instead, the value obtained by subtracting the predetermined margin from the driving force after gear shifting (the comparison-target driving force) and the current driving force may be compared with each other so that the shift instruction by gear-shift instruction device is not performed in the case where the current driving force is equal to or more than the comparison-target driving force.

This control operation is specialized in, particularly, the case where the driving force after gear shifting becomes large (in the case of down-shifting). In the case where the current driving force is equal to or more than the comparison-target driving force, the gear shift instruction operation to the shift-down side is not performed.

### (Modification 2)

Next, Modification 2 will be described. This modification is also different from the above-described embodiment in the condition under which the above-described shift instruction by the gear-shift instruction device is not performed in the case of the manual gear shift mode during regenerative operation. The configuration and the control operation are otherwise similar to those of the above-described embodiment. Therefore, similarly, only the condition under which the shift instruction by the gear-shift instruction device is not performed will be described here.

The condition under which the shift instruction is not performed in this modification is that the torque, which is determined by the vehicle speed V and the gear shift position, is in the operating region of the negative torque. In this case, the shift instruction by the gear-shift instruction device is not performed.

More specifically, in the flowchart illustrated in FIG. 11 in the above-described embodiment, the operation in step ST51 illustrated in FIG. 13 is performed after the determination of NO is made in step ST25. That is, it is determined whether or not the current operating region is the operating region of the negative torque.

In the case where the current operating region is the operating region of the negative torque, the determination of YES is made in step ST51. Subsequently, the gear shift instruction operation is not performed in step ST23.

In the case where the current operating region is not the operating region of the negative torque, the determination of NO is made in step ST51. Subsequently, the operation proceeds to the operation from step ST26 described above.

Here, the determination whether or not the current operating region is the operating region of the negative torque can be performed by mapping the above-described characteristics of the engine brake illustrated in FIG. 7 to make the determination based on this map. That is, it is determined whether or not the current operating region is the operating region of the negative torque where the torque is equal to or less than "0" in FIG. 7 (the engine braking torque is generated) corresponding to the vehicle speed V and the gear shift position. Subsequently, in the case of the operating region of the negative torque, the gear shift instruction operation is not performed.

This reduces gear shifting in the operating region of the negative torque where the vehicle occupant is especially likely to recognize the change in driving force, so as to prevent the vehicle occupant from feeling discomfort in association with the change in driving force. In the operating region of the positive torque, the gear shift instruction operation is performed (permitted) (which corresponds to the words "in a case where a torque region is a positive torque region, the operation for prompting the driver to change the gear shift position is configured to be released from a non-performance state (performed)" in the present invention). This allows ensuring the effects (improvement in regeneration efficiency and similar effect) by this gear shift instruction operation.

### (Modification 3)

Next, Modification 3 will be described. In this modification, the gear shift instruction operation is released from the non-performance state (performed) corresponding to the gear shift position. Specifically, in the case where the current gear shift position is on the higher gear side (on a gear shift position side with a lower gear shift ratio) compared with the recommended gear shift position, the gear shift instruction operation is released from the non-performance state so as to perform the shift-down instruction.

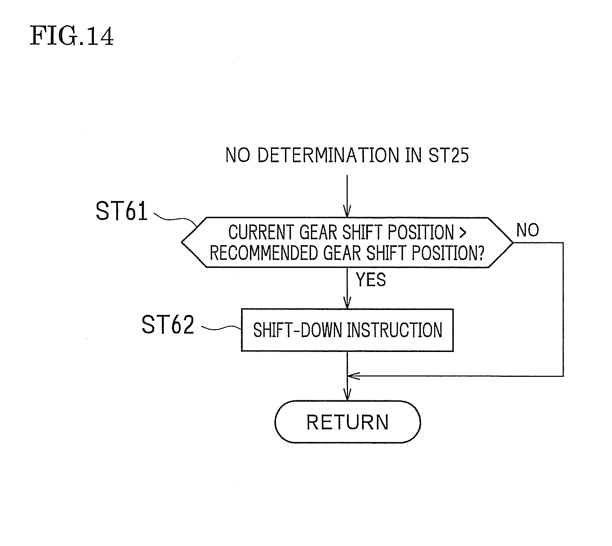

More specifically, in the flowchart illustrated in FIG. 11 in the above-described embodiment, the operation in step ST61 illustrated in FIG. 14 is performed after the determination of NO is made in step ST25. That is, it is determined whether or not the current gear shift position is on the higher gear side compared with the above-described recommended gear shift position (the current gear shift position > the recommended gear shift position). In the case where the current gear shift position is on the higher gear side compared with the recommended gear shift position, the determination of YES is made in step 61. Subsequently, the shift-down instruction is performed in step ST62.

This is in order to allow the rise in rotation speed of the engine 2 in association with down-shifting while avoiding discomfort to the driver due to the change in sense of deceleration in association with up-shifting under the situation where the change in driving force before and after gear shifting is likely to be large.

Here, in the case where it is determined whether or not the current gear shift position is on the lower gear side compared with the recommended gear shift position (the current gear shift position < the recommended gear shift position) and then the current gear shift position is determined to be on the lower gear side, the shift-up instruction may be performed.

This is in order to allow the change in sense of deceleration in association with up-shifting while avoiding excessive rotation of the engine 2 in association with down-shifting under the situation where the change in driving force before and after gear shifting is likely to be large.

The operation of this modification corresponds to the words "an amount of change in driving force when a change between respective gear shift positions is performed is preliminarily stored, and an operation for prompting the driver to change to a gear shift position where an amount of change in driving force with respect to a currently selected gear shift position has a predetermined value or more is configured not to be performed" in the present invention.

### (Modification 4)

Next, Modification 4 will be described. In the above-described embodiment, in the case of the manual gear shift mode during regenerative operation where the accelerator is turned off, on the condition that the depression operation of the brake pedal is not performed and that the vehicle speed exceeds a predetermined vehicle speed, the above-described shift instruction by the gear-shift instruction device is not performed in the case where the current driving force and the driving force after gear shifting do not coincide with each other. Instead, in this modification, in the case of the manual gear shift mode during the regenerative operation where the accelerator is turned off, the above-described shift instruction by the gear-shift instruction device is not performed irrespective of the depressed state of the brake pedal or the vehicle speed.

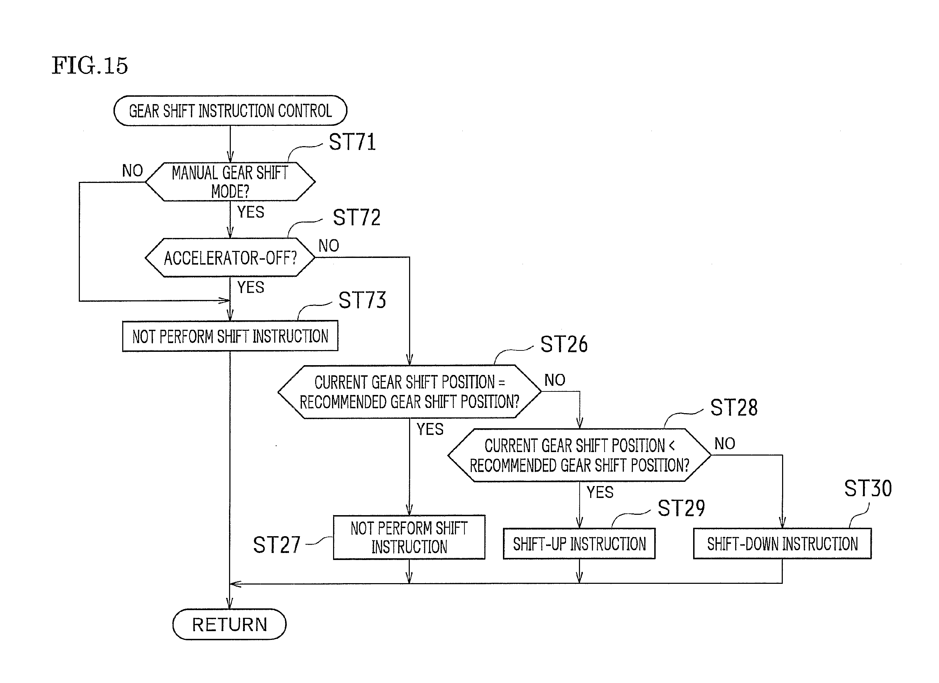

FIG. 15 is a flowchart illustrating a procedure of the gear shift instruction control in this modification.

Firstly, in step ST71, it is determined whether or not the current running mode is the manual gear shift mode. Specifically, also in this case, the position of the shift lever 91 is detected by the shift position sensor 50 to make the determination. That is, it is determined whether or not the detected position of the shift lever 91 is the S position.

Subsequently, in the case where the current running mode is the manual gear shift mode and then the determination of YES is made in step ST71, the process proceeds to step ST72 to determine whether or not the depression releasing operation of the accelerator pedal (the accelerator-OFF operation) is performed. In the case where the accelerator-OFF operation is not performed and then the determination of NO is made in step ST72, the above-described gear shift instruction operation from step ST26 to step ST30 is performed. That is, the recommended gear shift position and the current gear shift position are compared with each other to determine whether or not the recommended gear shift position and the current gear shift position coincide with each other. In the case where the recommended gear shift position and the current gear shift position coincide with each other, the shift instruction is not performed. That is, both of the shift-up lamp 67 and the shift-down lamp 68 are not turned on. On the other hand, in the case where the current gear shift position is a lower gear shift position than the recommended gear shift position, a control signal for issuing a shift-up command is transmitted from the hybrid ECU 10 to the GSI-ECU 16 so as to turn on the shift-up lamp 67 (see FIG. 10A). In the case where the current gear shift position is a higher gear shift position than the recommended gear shift position, a control signal for issuing a down-shift command is transmitted from the hybrid ECU 10 to the GSI-ECU 16 so as to turn on the shift-down lamp 68 (see FIG. 10B).

On the other hand, in the case where the accelerator-OFF operation is performed and the determination of YES is made in step ST72, the process proceeds to step ST73. Subsequently, the above-described gear shift instruction operation is not performed (the shift instruction is not performed) and both of the shift-up lamp 67 and the shift-down lamp 68 are not turned on.

### (Modification 5)

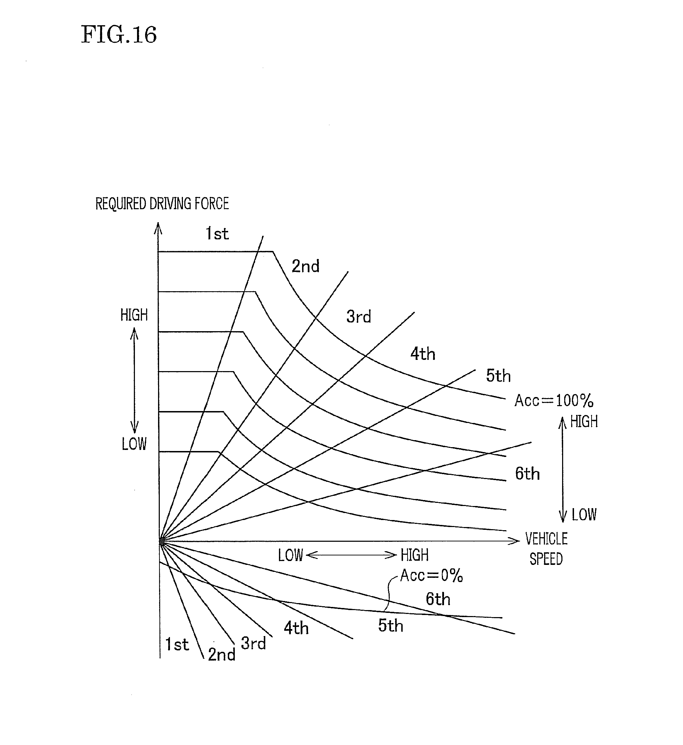

Next, Modification 5 will be described. In the above-described embodiment, like the target-gear-shift-position setting map illustrated in FIG. 6, the respective driving forces required in the accelerator-off state coincide with one another from the fourth gear shift position (4th) to the sixth gear shift position (6th). The present invention is not limited to this. Like a target-gear-shift-position setting map illustrated in FIG. 16, the driving force may be set to be lower (with a larger negative driving force) for a lower gear position (a gear position with a larger gear shift ratio) among all the gear shift positions from the first gear shift position (1st) to the sixth gear shift position (6th).

In this case, the driving force always changes when the gear shift position is changed. However, the amount of change in driving force between the respective gear shift positions is calculated based on the vehicle speed so that the gear shift instruction is not performed only with respect to the gear shift position where this amount of change in driving force exceeds a predetermined amount. Additionally, the amount of changes in driving force between the respective gear shift positions corresponding to the vehicle speed are listed in a table to be stored in the ROM 41. The current vehicle speed and the current gear shift position may be applied to the table to determine whether or not the gear shift instruction is not performed.

Here, "non-performance" and "performance" of the gear shift instruction in the above-described embodiment and the respective modifications do not always switch between the non-performance state and the performance state. A different condition may switch between the non-performance state and the performance state.

### -Other Embodiments-

In the above-described embodiment and the respective modifications, the description is made on the example where the present invention is applied to control over the front-engine front-drive (FF) hybrid vehicle; however, the present invention is not limited to this configuration. The present invention is also applicable to control over a front-engine rear-drive (FR) hybrid vehicle or control over a four-wheel-drive hybrid vehicle.

In the above-described embodiment and the respective modifications, the examples where the present invention is applied to the control over the hybrid vehicle on which two generator-motors of the first motor-generator MG1 and the second motor-generator MG2 are mounted has been described. However, the present invention is applicable to the control over a hybrid vehicle on which one generator-motor is mounted or a hybrid vehicle on which three or more generator-motors are mounted.

Additionally, the present invention is also applicable to a hybrid vehicle on which a series-hybrid system is installed. Furthermore, as a gear-shift system, the present invention is applicable to a range hold type system (where the selected gear shift position can be automatically shifted to a low gear position side) and a gear hold type system (where the selected gear shift position is maintained). As used herein, the term "range hold type" refers to the type where the hybrid ECU 10 performs automatic gear shifting within a limited gear-shift-position range where the current gear shift position is set as the upper-limit gear shift position and the upper-limit gear shift position is set as the highest gear shift position (with the lowest gear shift ratio) when the shift lever is in the S position, such as a state where, for example, if the gear shift position in the manual gear shift mode is the third (3rd) gear shift position, the third gear shift position is set as the upper-limit gear shift position and automatic gear shifting between the third (3rd) gear shift position and the first (1st) gear shift position is possible.

### INDUSTRIAL APPLICABILITY

The present invention is applicable to a gear-shift instruction device that performs a gear shift instruction for a driver in a hybrid vehicle that includes an electrical-type continuously variable transmission mechanism with a sequential shift mode.

### DESCRIPTION OF REFERENCE SIGNS

1 hybrid vehicle
2 engine (driving force source, internal combustion engine)
2a crankshaft
3 power split mechanism
3a sun gear
3b ring gear
3d planetary carrier
3e ring gear shaft (output shaft of engine)
6a, 6b front wheel (wheel, drive shaft)
7 reduction mechanism
9 shift operation device
10 hybrid ECU
16 GSI-ECU
67 shift-up lamp
68 shift-down lamp
MG1 first motor-generator (first electric motor)
MG2 second motor-generator (second electric motor, electric generator)

## Claims

1. A gear-shift instruction device to be applied to a hybrid vehicle including a driving power transmission system and an electric generator, the driving power transmission system being configured to allow manual selection of a gear shift position, the electric generator being configured to generate electric power in a driven state receiving a rotational force from a wheel, the electric generator being a generator-motor configured to output a driving force to a drive shaft, the gear-shift instruction device being configured to prompt a driver to change the gear shift position during power running of this generator-motor, wherein
the gear-shift instruction device is configured not to perform an operation for prompting the driver to change the gear shift position while electric generation of the electric generator is receiving a rotational force from the wheel.

2. The gear-shift instruction device according to claim 1, wherein
the gear-shift instruction device is configured to perform the operation for prompting the driver to change the gear shift position during running where the drive shaft is driven by the generator-motor alone.

3. The gear-shift instruction device according to claim 1, wherein
in a case where the driver is prompted to change the gear shift position and then changes the gear shift position in accordance with this prompting and an amount of change in driving force before and after the change is equal to or less than a predetermined amount, the operation for prompting the driver to change the gear shift position is configured to be released from a non-performance state.

4. The gear-shift instruction device according to claim 3, wherein
the case where the amount of change in driving force before and after the change of the gear shift position is equal to or less than the predetermined amount is a case where the amount of change in driving force before and after the change of the gear shift position is "0".

5. The gear-shift instruction device according to claim 3, wherein
the case where the amount of change in driving force before and after the change of the gear shift position is equal to or less than the predetermined amount is a case where a driving force before the change of the gear shift position has a smaller value than a value obtained by adding a predetermined margin to a value of a driving force after the change of the gear shift position.

6. The gear-shift instruction device according to claim 1, wherein
in a case where a torque region obtained based on a driving force and a vehicle speed that are required by the driver is a positive torque region, the operation for prompting the driver to change the gear shift position is configured to be released from a non-performance state.

7. The gear-shift instruction device according to claim 1, wherein
in a case where a vehicle speed at which a driving force of a driving force source for vehicle running becomes large compared with a braking torque, the operation for prompting the driver to change the gear shift position is configured to be released from a non-performance state.

8. The gear-shift instruction device according to claim 1, wherein
in a case where the driver is performing an operation for giving a braking force to the wheel, the operation for prompting the driver to change the gear shift position is configured to be released from a non-performance state.

9. The gear-shift instruction device according to claim 1, wherein
an amount of change in driving force when the gear shift position is changed is preliminarily stored corresponding to a vehicle speed, and
in a case where a current vehicle speed causes a predetermined amount or more as the amount of change in driving force when the gear shift position is changed, the operation for prompting the driver to change the gear shift position is configured not to be performed.

10. The gear-shift instruction device according to claim 1, wherein
an amount of change in driving force when a change between respective gear shift positions is performed is preliminarily stored, and
an operation for prompting the driver to change to a gear shift position where an amount of change in driving force with respect to a currently selected gear shift position has a predetermined value or more is configured not to be performed.

11. The gear-shift instruction device according to claim 1, wherein
in a case where a driving force required by the driver is equal to or less than a predetermined value, the operation for prompting the driver to change the gear shift position is configured not to be performed.

12. The gear-shift instruction device according to any one of claims 1 to 11, wherein
the driving power transmission system includes a continuously variable transmission mechanism configured to steplessly change a gear shift ratio, and the gear-shift instruction device is mounted on a hybrid vehicle configured to change the gear shift ratio set by the continuously variable transmission mechanism in multiple stages in a manual gear shift mode.

13. The gear-shift instruction device according to claim 12, wherein
the hybrid vehicle includes an internal combustion engine as a driving force source for running,
the driving power transmission system includes a power split mechanism constituted of a planetary gear mechanism, the planetary gear mechanism including a planetary carrier, a sun gear, and a ring gear, the planetary carrier being coupled to an output shaft of the internal combustion engine, the sun gear being coupled to a first electric motor, the ring gear being coupled to a second electric motor, and
the gear-shift instruction device is mounted on a hybrid vehicle where a rotation speed of the first electric motor is controlled to change a rotation speed of the internal combustion engine so as to change a gear shift ratio in the driving power transmission system and the second electric motor functions as the electric generator in the driven state.
